# EUROPEAN PATENT APPLICATION

(11) **EP 4 721 635 A1**
(43) Date of publication of application: **08.04.2026**
(21) Application number: 24907832.0
(22) Date of filing: 22.11.2024
(51) Int. Cl.: A47L 9/28, G05D 1/622, G05D 1/648, B25J 19/02

(54) **ROBOT CLEANER AND DETECTING METHOD THEREOF**

(30) Priority: 20.12.2023 KR 20230187093
(71) Applicant: Samsung Electronics Co., Ltd., Suwon-si, Gyeonggi-do 16677 (KR)
(72) Inventor: HONG, Hyunseok, Suwon-si, Gyeonggi-do 16677 (KR); PARK, Sahnggyu, Suwon-si, Gyeonggi-do 16677 (KR); LEE, Yeongrok, Suwon-si, Gyeonggi-do 16677 (KR)
(74) Representative: Gulde & Partner
(86) International application number: PCT/KR2024/018685
(87) International publication number: WO 2025/135547

(57) **Abstract**

A robot cleaner includes: an IR light source; an IR receiver; a driver; and one or more processors configured to: control the driver to move the robot cleaner through a space, output IR light using the IR light source while the robot cleaner moves through the space, and perform an operation of detecting liquid on a floor around the robot cleaner based on the reflected IR light received by the IR receiver, and to: perform the operation of detecting liquid in a first mode, based on the liquid being detected, change the robot cleaner to a second mode, and perform the operation of detecting liquid in the second mode. In the first mode, the operation of detecting liquid is performed based on a specific period. In the second mode, a period of the operation of detecting liquid is changed based on a distance between the robot cleaner and the liquid.

## Description

### [Technical Field]

The disclosure relates to a robot cleaner for navigating a space and a method for detecting liquid therein.

### [Background Art]

A robot may perform simple repetitive functions, and also, the robot may detect its surroundings in real time based on sensors, cameras, etc., and collect information and travel autonomously. The robot is used in various fields. At homes, robot cleaners are used.

A robot cleaner can clean a space by traveling through the space (e.g., an indoor space) and sucking in foreign substances.

Liquid such as water, milk, or pet urine may be on the floor within the space. If the robot cleaner is unable to accurately detect the location of the liquid, the contamination may spread to the surrounding area by the robot cleaner and the liquid may cause damage to the robot cleaner.

### [Detailed Description of the Disclosure]

### [Technical Solution]

Provided are a robot cleaner including an IR light source, an IR receiver, a driver, and one or more processors and a method for detecting liquid performed by the robot cleaner.

According to an aspect of the disclosure, a robot cleaner includes: an infrared ray (IR) light source; an IR receiver; a driver; and one or more processors operatively connected to the IR light source, the IR receiver, and the driver, the one or more processors being configured to: control the driver to move the robot cleaner through a space, output IR light using the IR light source while the robot cleaner moves through the space, and perform an operation of detecting liquid on a floor around the robot cleaner based on the IR light that is reflected by an object and received by the IR receiver, wherein the one or more processors are further configured to: perform the operation of detecting liquid in a first mode, based on the liquid being detected, change a mode of the robot cleaner to a second mode, and perform the operation of detecting liquid in the second mode, wherein, in the first mode, the operation of detecting liquid is performed based on a specific period, and wherein, in the second mode, a period of the operation of detecting liquid is changed based on a distance between the robot cleaner and the liquid.

The one or more processors may be further configured to: output the IR light to a front of the robot cleaner using the IR light source, obtain an IR image using the received IR light by photographing a front of the robot cleaner using the IR receiver, and identify whether there is liquid on the floor in front of the robot cleaner based on the IR image.

The one or more processors may be further configured to: based on the mode of the robot cleaner being changed to the second mode, identify a distance between the robot cleaner and the liquid based on the received IR light; identify a period of the operation of detecting liquid in the second mode based on a distance between the robot cleaner and the liquid; and perform the operation of detecting liquid based on the identified period, and wherein the period of the second mode decreases as a distance between the robot cleaner and the liquid decreases.

The period during which the robot cleaner performs the operation of detecting liquid in the second mode may be shorter than a period during which the robot cleaner performs the operation of detecting liquid in the first mode.

The one or more processors may be further configured to: based on the robot cleaner travelling to clean the liquid, clean the liquid, and based on cleaning of the liquid being completed, perform the operation of detecting liquid based on a set period in the second mode.

The one or more processors may be further configured to, based on the robot cleaner moving a preset distance after completing cleaning of the liquid, change the mode of the robot cleaner to the first mode, and perform the operation of detecting liquid in the first mode.

The one or more processors may be further configured to: based on the robot cleaner travelling to avoid the liquid, maintain the set period in the second mode while the robot cleaner changes a travelling direction; and based on the robot cleaner changing a travelling direction and moving in a direction away from the liquid, change the mode of the robot cleaner to the first mode, and perform the operation of detecting liquid in the first mode.

The one or more processors may be further configured to, based on the travelling direction of the robot cleaner that was moving in a direction away from the liquid being changed and the robot cleaner moving in a direction of the liquid, change the mode of the robot cleaner to the second mode based on a distance between the robot cleaner and the liquid, and perform the operation of detecting liquid in the second mode.

The one or more processors may be further configured to: identify a distance between the robot cleaner and the liquid when the robot cleaner moves in the direction of the liquid along a path that is a distance away from a path that travels in the direction away from the liquid; and based on the identified distance being a preset distance, change the mode of the robot cleaner to the second mode.

According to an aspect of the disclosure, a method performed by a robot cleaner for detecting liquid, includes: moving the robot cleaner through a space; outputting infrared ray (IR) light using an IR light source while the robot cleaner moves through the space; and performing an operation of detecting liquid on a floor around the robot cleaner based on the IR light that is reflected by an object and received by an IR receiver, wherein the performing the operation of detecting liquid includes: performing the operation of detecting liquid in a first mode, based on the liquid being detected, changing a mode of the robot cleaner to a second mode, and performing the operation of detecting liquid in the second mode, wherein, in the first mode, the operation of detecting liquid is performed based on a specific period, and wherein, in the second mode, a period of the operation of detecting liquid is changed based on a distance between the robot cleaner and the liquid.

The performing the operation of detecting liquid may further includes: outputting the IR light to a front of the robot cleaner using the IR light source, obtaining an IR image using the received IR light by photographing a front of the robot cleaner using the IR receiver; and identifying whether there is liquid on the floor in front of the robot cleaner based on the IR image.

The performing the operation of detecting liquid may further includes: based on the mode of the robot cleaner being changed to the second mode, identifying a distance between the robot cleaner and the liquid based on the received IR light; identifying a period of the operation of detecting liquid in the second mode based on a distance between the robot cleaner and the liquid; and performing the operation of detecting liquid based on the identified period, and wherein the period of the second mode decreases as a distance between the robot cleaner and the liquid decreases.

A period during which the robot cleaner performs the operation of detecting liquid in the second mode may be shorter than a period during which the robot cleaner performs the operation of detecting liquid in the first mode.

The performing the operation of detecting liquid may further includes, based on the robot cleaner travelling to clean the liquid, causing the robot cleaner to clean the liquid, and based on cleaning of the liquid being completed, performing the operation of detecting liquid based on a set period in the second mode.

The performing the operation of detecting liquid may further includes, based on the robot cleaner moving a preset distance after completing cleaning of the liquid, changing the mode of the robot cleaner to the first mode, and performing the operation of detecting liquid in the first mode.

In a non-transitory computer-readable recording medium storing computer instructions that, when executed by one or more processors of a robot cleaner according to an embodiment, cause the robot cleaner to perform an operation, the operation includes moving the robot cleaner through a space; outputting infrared ray (IR) light using an IR light source while the robot cleaner moves through the space; and performing an operation of detecting liquid on a floor around the robot cleaner based on the IR light that is reflected by an object and received by an IR receiver, wherein the performing the operation of detecting liquid includes: performing the operation of detecting liquid in a first mode, based on the liquid being detected, changing a mode of the robot cleaner to a second mode, and performing the operation of detecting liquid in the second mode, wherein, in the first mode, the operation of detecting liquid is performed based on a specific period, and wherein, in the second mode, a period of the operation of detecting liquid is changed based on a distance between the robot cleaner and the liquid.

### [Brief Description of Drawings]

The above and other aspects, features, and advantages of certain embodiments of the disclosure will be more apparent from the following description taken in conjunction with the accompanying drawings, in which:
FIG. 1 is a view provided to schematically explain a robot cleaner according to an embodiment;
FIG. 2 is a block diagram of a robot cleaner according to an embodiment;
FIGS. 3A and 3B are views provided to explain a sensor according to an embodiment;
FIG. 4 is a flowchart of a liquid detecting method of a robot according to an embodiment;
FIG. 5 is a view provided to explain a liquid detecting method using an IR image according to an embodiment;
FIGS. 6A, 6B, 6C, and 6D are views provided to explain an example of an operation in which a robot cleaner detects liquid according to an embodiment;
FIG. 7 is a flowchart of a liquid detecting method of a robot cleaner when the robot cleaner is travelling to clean liquid according to an embodiment;
FIGS. 8A and 8B are views provided to explain an example of an operation in which a robot cleaner detects liquid according to an embodiment;
FIG. 9 is a flowchart of a liquid detecting method of a robot cleaner when the robot cleaner is travelling to avoid liquid according to an embodiment;
FIGS. 10A, 10B, 10C, and 10D are views provided to explain an example of an operation in which a robot cleaner detects liquid according to an embodiment;
FIG. 11 is a view provided to explain a depth sensor and an IR light source according to an embodiment;
FIG. 12 is a view provided to explain an example of an operation in which a robot cleaner identifies a ratio corresponding to an area according to an embodiment;
FIG. 13 is a view provided to explain an example of a method in which a robot cleaner performs an operation based on a ratio corresponding to an area according to an embodiment;
FIG. 14 is a view provided to explain an example of a method in which a user sets a ratio corresponding to an area according to an embodiment;
FIG. 15 is a view provided to explain an example of a method in which a robot cleaner performs an operation of adjusting a ratio according to a distance from liquid according to an embodiment;
FIGS. 16A and 16B are views provided to explain an example of a method in which a robot cleaner drives an IR camera based on a direction of liquid according to an embodiment;
FIG. 17 is a block diagram of a configuration of a robot cleaner according to an embodiment; and
FIG. 18 is a flowchart of a liquid detecting method of a robot cleaner according to an embodiment.

### [Detailed Description of Embodiments]

The terms as used in the disclosure are provided to merely describe specific embodiments, not intended to limit the scope of other embodiments. Singular forms include plural referents unless the context clearly dictates otherwise. The terms and words as used herein, including technical or scientific terms, may have the same meanings as generally understood by those skilled in the art. The terms as generally defined in dictionaries may be interpreted as having the same or similar meanings as or to contextual meanings of the relevant art. Unless otherwise defined, the terms should not be interpreted as ideally or excessively formal meanings. Even though a term is defined in the disclosure, the term should not be interpreted as excluding embodiments of the disclosure under circumstances.

The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C, and any variations thereof. As an additional example, the expression "at least one of a, b, or c" may indicate only a, only b, only c, both a and b, both a and c, both b and c, all of a, b, and c, or variations thereof.

The terms "include" and "comprise", and the derivatives thereof refer to inclusion without limitation. The term "or" is an inclusive term meaning "and/or". The phrase "associated with," as well as derivatives thereof, refer to include, be included within, interconnect with, contain, be contained within, connect to or with, couple to or with, be communicable with, cooperate with, interleave, juxtapose, be proximate to, be bound to or with, have, have a property of, have a relationship to or with, or the like.

A "unit" or a "module" used in the disclosure refer to a hardware component such as a processor or a circuit, and/or a software component executed by a hardware component such as a processor. The "unit" or the "module" may be implemented by a program that is stored in a storage medium which may be addressed, and is executed by a processor. For example, the "unit" or the "module" may be implemented by components such as software components, object-oriented software components, class components, and task components, processes, functions, attributes, procedures, sub-routines, segments of a program code, drivers, firmware, a micro code, a circuit, data, a database, data structures, tables, arrays and parameters.

Various elements and regions in the drawings are schematically drawn. Therefore, the technical aspect of the disclosure is not limited by a relative size or spacing drawn in the accompanying drawings.

Hereinafter, the disclosure will be described with reference to the accompanying drawings.

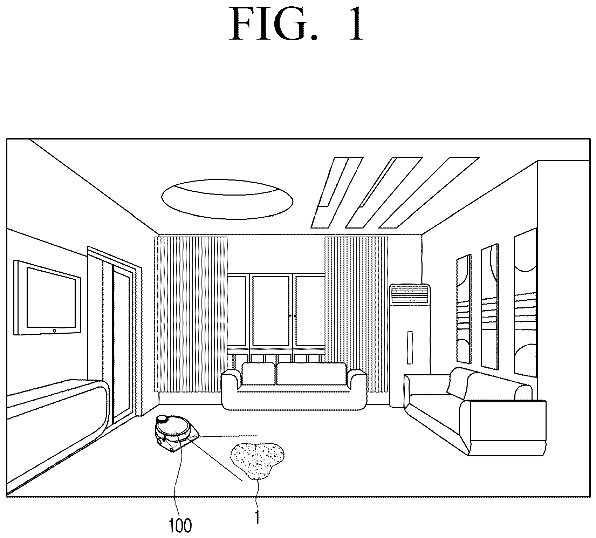

FIG. 1 is a view provided to schematically explain a robot cleaner according to an embodiment.

Referring to FIG. 1, a robot cleaner 100 may perform a cleaning operation while moving through a space. Throughout the disclosure, the term 'space' may indicate or correspond to an area, a room, or a physically divided section in a building (such as a home, an office, a hotel, a factory, a store, a grocery store, a restaurant).

Moving the robot cleaner 100 may include the robot cleaner 100 exploring its surroundings to detect the location of the robot cleaner 100 and surrounding objects, and using the detected information to move itself within the space. The expression 'moving' may be replaced with, for example, 'traveling', or the like.

The objects may include various types of obstacles present in the indoor space where the robot cleaner 100 is located, such as, walls, furniture, home appliances, and the like. In an embodiment, the objects may include liquid 1 on the floor of the space.

The cleaning operation may include the robot cleaner 100 moving through the space and sucking foreign substances such as dust from the floor. The cleaning operation may also include the robot cleaner 100 moving through the space and mopping the floor using a mop or the like.

According to an embodiment, the robot cleaner 100 may detect the liquid 1 on the floor around the robot cleaner 100, and specific operations will be described later in greater detail with reference to the following drawings and corresponding descriptions.

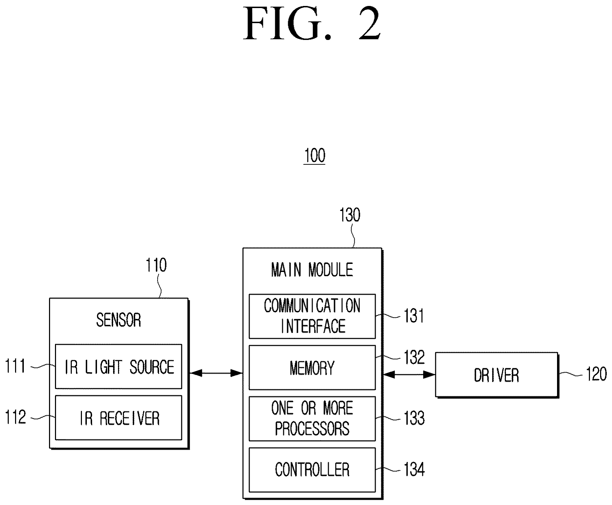

FIG. 2 is a block diagram of a robot cleaner according to an embodiment.

Referring to FIG. 2, the robot cleaner 100 may include a sensor 110, a driver 120, and a main module 130. The configuration of the robot cleaner 100 shown in FIG. 2 is only one embodiment, and some configurations may be added according to embodiments.

The sensor 110 is configured to sense information about the surrounding environment of the robot cleaner 100. One or more processors 133 may obtain the information based on a sense value of the sensor 110. For example, the one or more processors 133 may use the sensor 110 to detect the liquid 1 on the floor around the robot cleaner 100.

The sensor 110 may include an infrared ray (IR) light source 111 and an IR receiver 112.

The IR light source 111 may output IR light. For example, the IR light source 111 may include an IR LED, a laser or the like for outputting IR light. The IR light source 111 may output IR light to the front of the robot cleaner 100. The expression 'output' may be replaced with, for example, 'emit', 'irradiate', or the like, and the expression, 'IR light' may be replaced with, for example, 'IR', 'IR signal', or the like.

The IR receiver 112 can receive IR light. For example, the IR receiver 112 may include an IR camera for receiving light in an infrared band. According to an embodiment, the IR receiver 112 may include one or more IR cameras. The IR light output by the IR light source 111 may be reflected by an object. The IR receiver 112 may receive the IR light reflected by the object, and may generate an IR image using the received IR light.

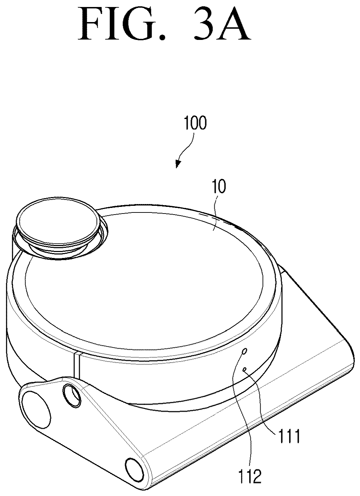

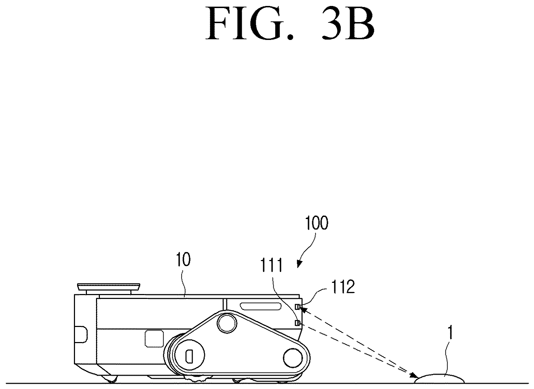

FIGS. 3A and 3B are views provided to explain a sensor according to an embodiment.

Referring to FIG. 3A, the IR light source 111 may be disposed on the front of a body 10 of the robot cleaner 100. In this case, disposing the IR light source 111 on the front of the body 10 may include disposing the IR light source 111 on the robot cleaner 100 such that the IR light source 111 may output IR light to the front of the robot cleaner 100. Accordingly, the IR light source 111 may be installed on the front of the body 10, or may be installed inside the front of the body 10 to output IR light to the front of the robot cleaner 100.

In an embodiment, the IR receiver 112 may be disposed on the front of the body 10 of the robot cleaner 100. In this case, disposing the IR receiver 112 on the front of the body 10 may include disposing the IR receiver 112 on the robot cleaner 100 such that the IR receiver 112 may receive IR light entering the robot cleaner 100 from the front of the robot cleaner 100. Accordingly, the IR receiver 112 may be installed on the front of the body 10, or may be installed inside the front of the body 10 to receive IR light coming from the front of the robot cleaner 100.

In this case, the IR light source 111 may be located below the IR receiver 112. In other words, the IR light source 111 may be disposed at a lower height than the IR receiver 112 on the robot cleaner 100. For example, the IR light source 111 may be disposed at a height of 0.5 cm to 3 cm above the floor when the robot cleaner 100 is located on the floor. However, the disclosure is not limited thereto, and the IR light source 111 may be disposed at various heights in the lower area of the front in consideration of the size of the robot cleaner 100. In an embodiment, the IR light source 111 may have an angle of view such that the IR light output from the IR light source 111 is narrowly spread in the vertical direction and widely spread in the horizontal direction. For example, the IR light source 111 may have a horizontal angle of view of ±60° and a vertical angle of view of ±20°. However, the disclosure is not limited thereto, and the IR light source 111 may have various angles of view.

For example, referring to FIG. 3B, the IR light output from the IR light source 111 may be reflected by the liquid 1 on the floor in front of the robot cleaner 100, and the reflected IR light may be received by the IR receiver 112. The one or more processors 133 may output IR light using the IR light source 111, and when the IR light is reflected by the object and received by the IR receiver 112, the one or more processors 133 may perform the operation of detecting liquid on the floor around the robot cleaner 100 based on the received IR light.

The driver 120 may control the movement of the robot cleaner 100 under the control of the one or more processors 133. For example, the driver 120 may move the robot cleaner 100, stop the robot cleaner 100 in motion, or control the speed and/or direction of the movement of the robot cleaner 100.

For example, the robot cleaner 100 may be moved by rotation of one or more wheels provided on the robot cleaner 100. The driver 120 may include a device for generating power to rotate the wheels. For example, the driver 120 may be implemented as a gasoline engine, a diesel engine, a liquefied petroleum gas (LPG) engine, an electric motor, or the like, depending on the fuel (or energy source) used.

The main module 130 is implemented as hardware, and may include a communication interface 131, memory 132, one or more processors 133, and a controller 134.

The communication interface 131 may perform data communication with electronic apparatuses under the control of the one or more processors 133. In this case, the electronic apparatuses may include servers, home appliances, mobile devices (e.g., smartphones, tablet PCs, wearable devices, etc.), and the like.

For example, the communication interface 131 may include communication circuitry capable of performing data communication between the robot cleaner 100 and the electronic apparatus using at least one of data communication methods including wired LAN, wireless LAN, Wi-Fi, Bluetooth, ZigBee, Wi-Fi Direct (WFD), infrared communication. (IrDA, infrared Data Association), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliances (WiGig) and RF communication.

The memory 132 may store instructions, data structures, and program codes. The operations performed by the one or more processors 133 may be implemented by executing program instructions or codes stored in the memory 132.

The memory 132 may include memory of a flash memory type, a hard disk type, a multimedia card micro type, or a card type (for example, SD or XD memory, etc.), and may include non-volatile memory including at least one of Read-Only Memory (ROM), Electrically Erasable Programmable Read-Only Memory (EEPROM), Programmable Read-Only Memory (PROM), magnetic memory, magnetic disk, or optical disk, or volatile memory such as random access memory (RAM) or static random access memory (SRAM).

The memory 132 may store one or more instructions and/or programs that cause the robot cleaner 100 to perform the operation of detecting liquid on the floor.

The one or more processors 133 may control the overall operations of the robot cleaner 100. For example, the one or more processors 133 may execute one or more instructions of a program stored in the memory 132 to control the overall operations of the robot cleaner 100 to detect liquid on the floor.

For example, the one or more processors 133 may detect whether there is liquid on the floor around the robot cleaner 100, and when liquid is detected, perform various calculations to perform an operation according to detection of the liquid, and transmit a signal regarding the results of the computations to the controller 134.

The controller 134 may control the components of the robot cleaner 100. The controller 134 may control the components of the robot cleaner 100 (e.g., the IR light source 111 and the driver 120, etc.) based on signals provided by the one or more processors 133. For example, the controller 134 may generate a control signal using a signal provided from the one or more processors 133, and provide the control signal to the components of the robot cleaner 100. Accordingly, the components of the robot cleaner 100 may perform an operation corresponding to the results of the computations of the one or more processors 133. The controller 134 may be implemented as one or more ICs (e.g., a controller IC).

The one or more processors 133 may include one or more of a central processing unit (CPU), a graphics processing unit (GPU), an accelerated processing unit (APU), a many integrated core (MIC), a Digital Signal Processor (DSP), a neural processing unit (NPU), a hardware accelerator, or a machine learning accelerator. The one or more processors 133 may control one or any combination of the other components of the robot cleaner 100, and may perform communication-related operations or data processing. The one or more processors 133 may execute one or more programs or instructions stored in the memory 132. For example, the one or more processors 133 may perform a method according to an embodiment by executing one or more instructions stored in the memory 132.

When a method according to an embodiment includes a plurality of operations, the plurality of operations may be performed by one processor or by a plurality of processors. For example, when a first operation, a second operation, and a third operation are performed by the method according to an embodiment, all of the first operation, the second operation, and the third operation may be performed by the first processor, or the first operation and the second operation may be performed by the first processor (e.g., a general-purpose processor) and the third operation may be performed by the second processor (e.g., an artificial intelligence-dedicated processor).

The one or more processors 133 may be implemented as a single core processor comprising a single core, or as one or more multicore processors including a plurality of cores (e.g., homogeneous multicore or heterogeneous multicore). When the one or more processors 133 are implemented as multicore processors, each of the plurality of cores included in a multicore processor may include a processor internal memory, such as a cache memory and an on-chip memory, and a common cache shared by the plurality of cores may be included in the multicore processor. Further, each of the plurality of cores (or some of the plurality of cores) included in the multi-core processor may independently read and perform program instructions to implement the method according to an embodiment, or all (or some) of the plurality of cores may be coupled to read and perform program instructions to implement the method according to an embodiment.

When a method according to an embodiment includes a plurality of operations, the plurality of operations may be performed by one core of a plurality of cores included in a multi-core processor, or may be performed by a plurality of cores. For example, when a first operation, a second operation, and a third operation are performed by a method according to an embodiment, all of the first operation, the second operation, and the third operation may be performed by the first core included in the multi-core processor, or the first operation and the second operation may be performed by the first core included in the multi-core processor and the third operation may be performed by the second core included in the multi-core processor.

In the embodiments of the disclosure, the processor may refer to a system-on-chip (SoC) in which one or more processors and other electronic components are integrated, a single-core processor, a multi-core processor, or a core included in a single-core processor or multi-core processor, and here, the core may be implemented as CPU, GPU, APU, MIC, DSP, NPU, hardware accelerator, or machine learning accelerator, etc., but the core is not limited to the embodiments of the disclosure.

Hereinafter, the one or more processors 133 will be referred to as a processor 133.

The processor 133 may control the driver 120 to cause the robot cleaner 100 to move through a space. In an embodiment, the processor 133 may perform the operation of detecting liquid while the robot cleaner 100 is moving through the space.

The operation of detecting liquid may include identifying whether there is liquid on the floor in front of the robot cleaner 100. For example, the processor 133 may output IR light to the front of the robot cleaner 100 using the IR light source 111, capture the front of the robot cleaner 100 using the IR receiver 112, obtain an IR image using the IR light received by the IR receiver 112, and identify whether there is liquid on the floor in front of the robot cleaner 100 based on the IR image.

According to an embodiment, when liquid is detected, the robot cleaner 100 may change the period of the liquid detecting operation.

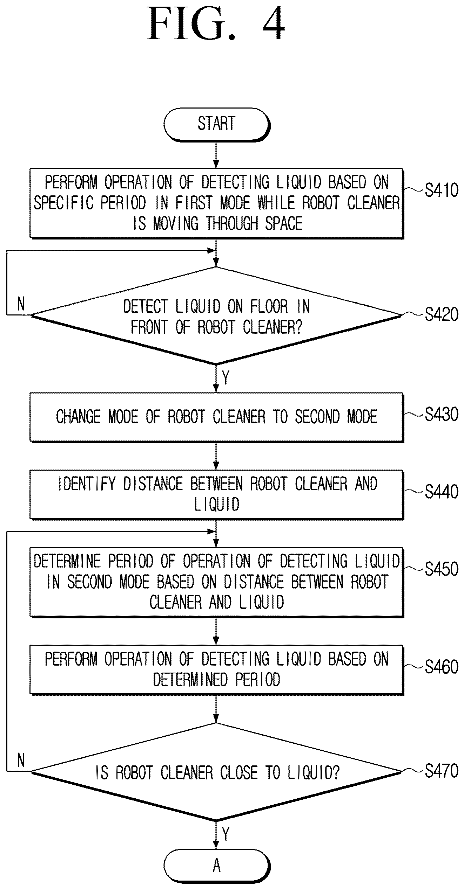

FIG. 4 is a flowchart of a liquid detecting method of a robot according to an embodiment.

In operation S410, the processor 133 may perform the operation of detecting liquid in the first mode while the robot cleaner 100 is moving through a space.

The first mode is a mode in which the liquid detecting operation is performed based on a specific period. For example, the first mode may be replaced with the expression of a normal mode, a liquid detection mode, etc.

For example, when a user input to begin cleaning is received, the robot cleaner 100 may begin cleaning a space, and may move through the space to perform cleaning of the space. In this case, the robot cleaner 100 may perform the operation of detecting liquid in the first mode.

When the mode of the robot cleaner 100 is the first mode, the processor 133 may perform the operation of detecting liquid based on a specific period. The specific period may be a fixed value. The period during which the robot cleaner 100 performs the operation of detecting liquid in the first mode may be preset during the manufacturing stage of the robot cleaner 100.

For example, the period set in the first mode is T₀ (ms). The processor 133 may output IR light using the IR light source 111 at the time t and perform photographing using the IR receiver 112 to capture an IR image. The processor 133 may then use the IR image to identify whether there is liquid on the floor. In an embodiment, the processor 133 may output IR light using the IR light source 111 at the time t+T₀ and perform photographing using the IR receiver 112 to obtain an IR image. Subsequently, the processor 133 may use the IR image to identify whether there is liquid on the floor.

The processor 133 may input the IR image to an artificial intelligence (AI) model to identify whether there is liquid on the floor. The memory 132 may store the artificial intelligence model. The artificial intelligence model may include a neural network model trained to recognize liquid in the IR image. The artificial intelligence model may output a probability value that an object detected in an IR image input to the artificial intelligence model may be inferred to be liquid. For example, the artificial intelligence model may include a neural network model configured with parameters that are trained by applying IR images obtained by photographing a floor with liquid where IR light is output as input data and the liquid contained in the IR images as output values.

For example, IR light is output to a floor with liquid, and the floor with liquid is captured using an IR camera. In this case, the amount of IR light reflected by a liquid-free portion of the floor and received by the IR camera may be greater than the amount of IR light reflected by the side of the liquid and received by the IR camera. Accordingly, in the IR image captured by the IR camera, the area corresponding to the side of the liquid may be brighter than the area corresponding to the floor. Also, since the top surface of the liquid absorbs a little more IR light in a certain band, the area corresponding to the top surface of the liquid in the IR image captured by the IR camera may be a little darker than the area corresponding to the floor.

The processor 133 may input the IR image captured by the IR receiver 112 to an artificial intelligence model to identify whether there is liquid on the floor.

For example, the processor 133 may input the IR image to an artificial intelligence model to obtain a probability value from the artificial intelligence model, compare the probability value to a preset value, and identify whether there is liquid in the IR image. When liquid is detected in the IR image, the processor 133 may identify that there is liquid on the floor in front of the robot cleaner 100.

In an embodiment, the artificial intelligence model may output information about the location of areas where there is liquid in the IR image.

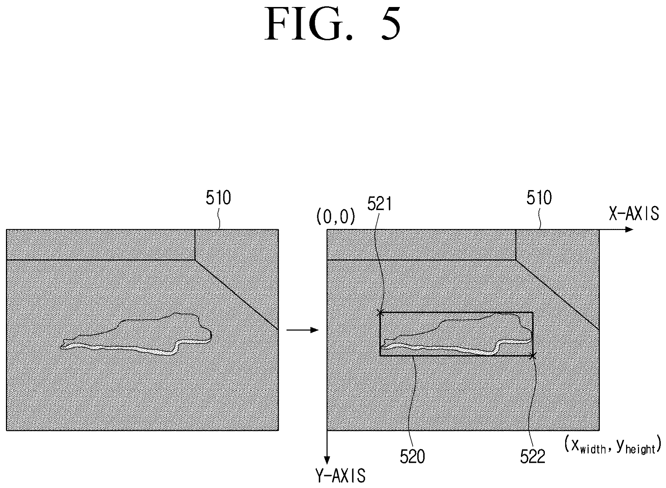

The location of the area with liquid may include the location of a bounding box for the liquid in the IR image. The bounding box for the liquid may be a rectangular-shaped box that includes the area where the liquid is detected in the IR image. For example, as shown in FIG. 5, the processor 133 may obtain an IR image 510 by photographing the front of the robot cleaner 100 using the IR receiver 112. When there is liquid on the floor in front of the robot cleaner 100, the liquid may be included in the IR image 510. In this case, assuming that the coordinates of a pixel in the upper left of the IR image 510 are (0, 0) and the coordinates of a pixel in the lower right are (x_{width} , y_{height}), the location of a bounding box 520 may be represented by the x and y coordinate values of a pixel 521 corresponding to the upper left vertex of the bounding box 520 and the x and y coordinate values of a pixel 522 corresponding to the lower right vertex of the bounding box 520.

In operations of S420-Y and S430, when liquid is detected while the processor 133 performs the operation of detecting liquid in the first mode, the processor 133 may change the mode of the robot cleaner 100 to a second mode. The second mode is a mode in which the period of the liquid detecting operation changes based on the distance between the robot cleaner 100 and the liquid. For example, the second mode may be replaced with expressions such as a high-speed mode, a high-speed liquid detection mode, and the like.

In operation S440, when the mode of the robot cleaner 100 is changed to the second mode, the processor 133 may identify the distance between the robot cleaner 100 and the liquid based on the received IR light.

For example, the processor 133 may identify the distance between the robot cleaner 100 and the liquid using an IR image in which the liquid is detected.

When the robot cleaner 100 photographs a floor with liquid, if the distance between the robot cleaner 100 and the liquid is far, the liquid may be located in an upper area of the IR image, and if the distance between the robot cleaner 100 and the liquid is close, the liquid may be located in a lower area of the IR image. In view of this, the memory 132 may store information about the distance between the robot cleaner 100 and the liquid based on the location of the liquid in the IR image. For example, the memory 132 may store information about a distance corresponding to each of a plurality of y coordinate values corresponding to a plurality of locations of the liquid.

In this case, the processor 133 may identify, among a plurality of distances corresponding to a plurality of y-coordinate values stored in the memory 132, a distance corresponding to the y-coordinate value of a pixel corresponding to the lower right vertex of the bounding box regarding the liquid. Subsequently, the processor 133 may identify the identified distance as a distance between the robot cleaner 100 and the liquid. For example, the processor 133 may determine that the robot cleaner 100 is away from the liquid by the identified distance.

The processor 133 may identify the location of the liquid based on the location of the robot cleaner 100 and the distance between the robot cleaner 100 and the liquid, and store information about the identified location in the memory 132. For example, the location of the robot cleaner 100 and the location of the liquid may be represented by coordinate values.

In operation S450, the processor 133 may identify a period of the operation for detecting the liquid in the second mode based on the distance between the robot cleaner 100 and the liquid. The period of the second mode may have a smaller value as the distance between the robot cleaner 100 and the liquid becomes closer. In an embodiment, the period where the robot cleaner 100 performs the operation of detecting liquid in the second mode may be shorter than the period where the robot cleaner 100 performs the operation of detecting liquid in the first mode.

For example, the memory 132 may store information about a period value corresponding to the distance between the robot cleaner 100 and the liquid.

According to an embodiment, the memory 132 may store a period value corresponding to each of a plurality of distance ranges between the robot cleaner 100 and the liquid. In this case, the plurality of period values corresponding to the plurality of distance ranges may be stored in the memory 132 in the form of a lookup table. For example, the memory 132 may store a period value (T₁ (ms)) corresponding to a distance range where the distance between the robot cleaner 100 and the liquid is less than d₁ and greater than d₂, a period value (T₂ (ms)) corresponding to a distance range where the distance between the robot cleaner 100 and the liquid is less than d₂ and greater than d₃, ...., a period value (Tₙ₋₁ (ms)) corresponding to a distance range where the distance between the robot cleaner 100 and the liquid is less than dₙ₋₁ and greater than dₙ. Here, n is a natural number greater than 1, and dₙ <dₙ₋₁ <...<d₂ <d₁.

In this case, a plurality of period values corresponding to a plurality of distance ranges may be set such that the period value becomes smaller as the robot cleaner 100 approaches the liquid. For example, T₁ >T₂ >...>Tₙ₋₁. In an embodiment, the largest period value among the plurality of period values corresponding to the plurality of distance ranges may be smaller than the period value of the first mode. For example, when the period value set in the first mode is T₀ , then T₁ <T₀.

The processor 133 may identify a distance between the robot cleaner 100 and the liquid based on the IR image in which the liquid is detected. The processor 133 may identify a distance range to which the identified distance belongs among a plurality of distance ranges, and may set a period value corresponding to the identified distance range as a period for performing the operation of detecting liquid in the second mode.

In operation S460, the processor 133 may perform the operation of detecting liquid based on the identified period.

For example, the processor 133 may identify that when the distance d between the robot cleaner 100 and the liquid identified based on the IR image belongs to a distance range that is less than d₁ and greater than d₂ among a plurality of distance ranges (i.e., d₂ ≤d<d₁), the period of the liquid detecting operation is T₁ (ms). The processor 133 may output IR light using the IR light source 111 at time t and perform photographing using the IR receiver 112 to obtain an IR image. Subsequently, the processor 133 may use the IR image to identify whether there is liquid on the floor. In an embodiment, the processor 133 may output IR light using the IR light source 111 at the time t+T₁ and perform photographing using the IR receiver 112 to obtain an IR image. Subsequently, the processor 133 may use the IR image to identify whether there is liquid on the floor.

In operation S470, the processor 133 may identify whether the robot cleaner 100 is close to the liquid.

For example, when the distance between the robot cleaner 100 and the liquid is less than a preset value, the processor 133 may identify that the robot cleaner 100 is close to the liquid, and when the distance between the robot cleaner 100 and the liquid is greater than the preset value, the processor 133 may identify that the robot cleaner 100 is not close to the liquid.

The liquid detected by the robot cleaner 100 is located in front of the robot cleaner 100, and the robot cleaner 100 is moving forward. Accordingly, the robot cleaner 100 may get closer and closer to the liquid. The robot cleaner 100 may perform the operation of detecting liquid while moving in the direction where the liquid is located. In this case, the processor 133 may identify a distance between the robot cleaner 100 and the liquid using the IR image obtained while performing the operation of detecting liquid, and may identify whether the robot cleaner 100 is close to the liquid based on the identified distance.

In operation S470-N, when it is identified that the robot cleaner 100 is not close to the liquid, the processor 133 may perform operations S450 and S460.

For example, the processor 133 may identify a period of performing the operation of detecting liquid in the second mode based on the distance between the robot cleaner 100 and the liquid, and may perform the operation of detecting liquid based on the identified period.

As the robot cleaner 100 moves, the distance range to which the distance between the robot cleaner 100 and the liquid belongs may vary as the robot cleaner 100 moves closer and closer to the liquid. Accordingly, the processor 133 may repeatedly identify a range of distances to which the distance between the robot cleaner 100 and the liquid belongs during the movement of the robot cleaner 100, and perform the operation of detecting liquid based on the identified period.

In this case, considering that the period of the operation of detecting liquid is set to a smaller value as the robot cleaner 100 approaches the liquid, the robot cleaner 100 may perform more operations of detecting liquid within a certain time period as the robot cleaner 100 approaches the liquid. Accordingly, the robot cleaner 100 may detect the liquid more accurately. Further, the liquid detection efficiency of the robot cleaner 100 may be increased in that other liquid is likely to be present near the area where the liquid is detected.

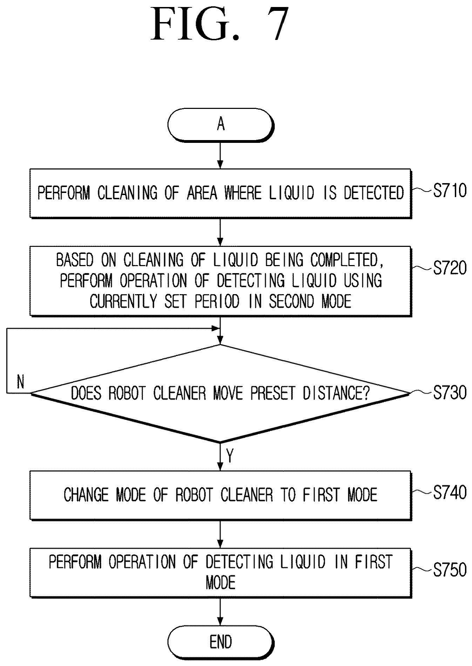

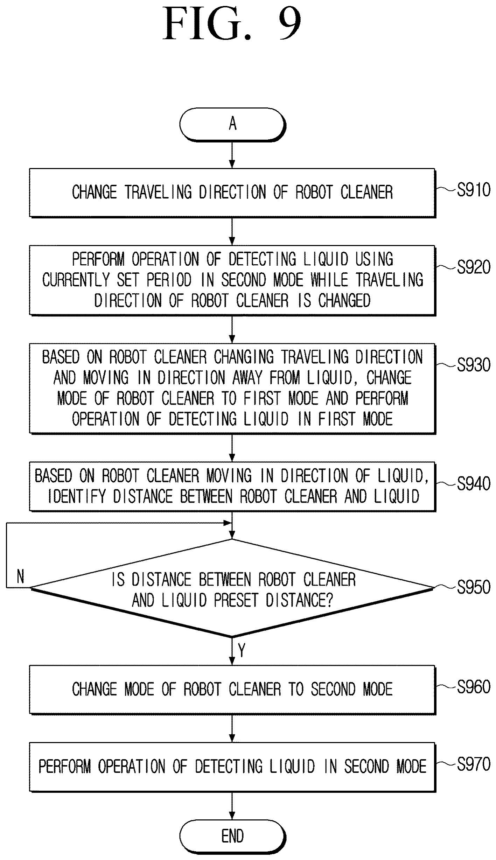

In operation S470-Y, when it is identified that the robot cleaner 100 is close to the liquid, the processor 133 may perform operations shown in FIG. 7 ("A") or in FIG. 9 ("A").

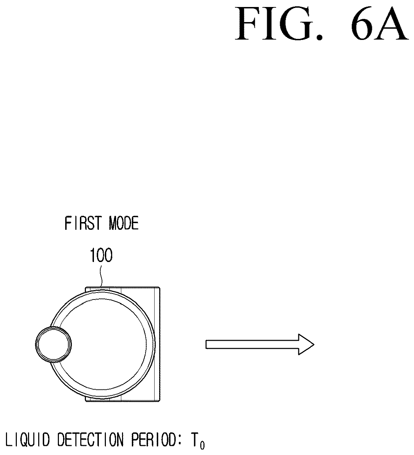

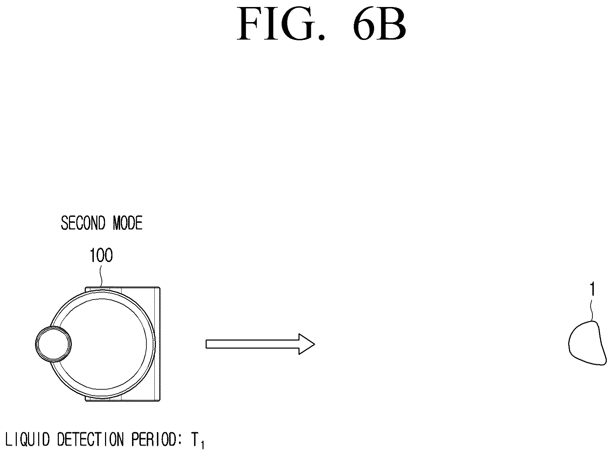

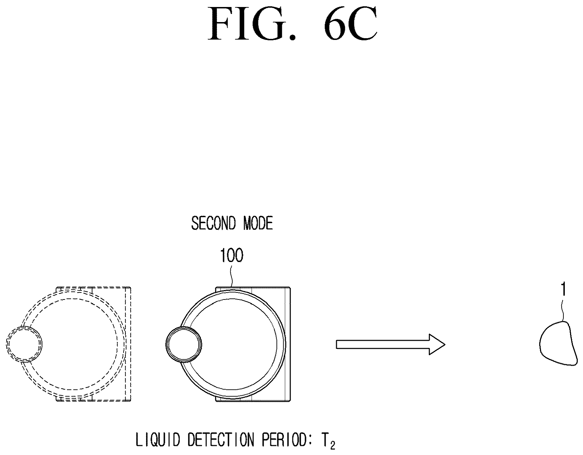

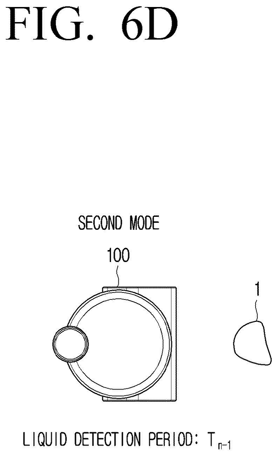

FIGS. 6A, 6B, 6C, and 6D are views provided to explain an example of an operation in which a robot cleaner detects liquid according to an embodiment.

Referring to FIG. 6A, the robot cleaner 100 may perform the operation of detecting liquid while moving forward in the first mode. In this case, the period during which the robot cleaner 100 performs the liquid detecting operation in the first mode may be T₀ (ms). In other words, the robot cleaner 100 may identify whether there is liquid on the floor in front of the robot cleaner 100 every T₀ (ms) while moving through a space.

As shown in FIG. 6B, when the liquid 1 is detected, the robot cleaner 100 may change the mode of the robot cleaner 100 to the second mode. Subsequently, the robot cleaner 100 may identify a period during which the robot cleaner 100 performs the operation of detecting liquid in the second mode based on a distance between the robot cleaner 100 and the liquid, and may move to perform the operation of detecting liquid based on the identified period.

For example, referring to FIGS. 6B, 6C, and 6D, the period during which the robot cleaner 100 performs the liquid detecting operation may change sequentially to T₁ , T₂ ,..., Tₙ₋₁ until the robot cleaner 100 approaches the liquid. In this case, T₁ >T₂ >...> Tₙ₋₁. In other words, as the robot cleaner 100 becomes close to the liquid, the operation of detecting liquid may be performed at shorter intervals.

When the robot cleaner 100 approaches the liquid, the robot cleaner 100 may perform a cleaning run or an avoidance run for the liquid.

The cleaning run may include the operation of the robot cleaner 100 moving after cleaning the liquid on the floor using a cleaning device. The avoidance run may include the operation of the robot cleaner avoiding the liquid by changing the traveling direction, and moving along a different path.

Whether the robot cleaner 100 performs the cleaning run or the avoidance run for the liquid may be determined by a variety of methods.

According to an embodiment, the travelling type of the robot cleaner 100 may be preset. For example, the robot cleaner may perform dry cleaning and/or wet cleaning. Dry cleaning may include sucking up foreign substances on the floor, and wet cleaning may include wiping the floor with a mop or the like.

For example, the robot cleaner 100 may perform a dry cleaning function, and when the robot cleaner 100 is unable to perform a wet cleaning function, the robot cleaner 100 may be configured to perform an avoidance run for liquid.

In an embodiment, when the robot cleaner 100 is capable of performing a dry cleaning function and a wet cleaning function, the robot cleaner 100 may perform a cleaning run or an avoidance run for liquid depending on the cleaning mode of the robot cleaner 100. For example, when the cleaning mode is a dry cleaning mode, the robot cleaner 100 may perform an avoidance run for liquid. In an embodiment, when the cleaning mode is a wet cleaning mode, the robot cleaner 100 may perform a cleaning run for liquid. In this case, the dry cleaning mode is a mode in which the robot cleaner 100 performs dry cleaning. The wet cleaning mode is a mode in which the robot cleaner 100 performs wet cleaning, or performs dry and wet cleaning.

When the robot cleaner 100 is capable of performing a wet cleaning function, the robot cleaner 100 may perform a cleaning run or an avoidance run for liquid depending on the type of liquid and/or the type of mop equipped in the cleaning device. The type of liquid may be differentiated based on whether the liquid is water or non-water.

For example, when the type of the mop is a roller type, the robot cleaner 100 may perform a cleaning run for liquid regardless of the type of liquid. The roller type may refer to a type in which the mop rotates about a horizontal axis (e.g., an axis parallel to the floor). In an embodiment, when the type of the mop is a panning type and the liquid is water, the robot cleaner 100 may perform a cleaning run for the liquid, and when the type of the mop is a panning type and the liquid is liquid other than water, the robot cleaner 100 may perform an avoidance run for the liquid. The panning type may refer to a type in which the mop rotates about a vertical axis (e.g., an axis perpendicular to the floor).

According to an embodiment, when the robot cleaner 100 approaches liquid, the robot cleaner may perform a cleaning run or an avoidance run for the liquid, and may perform the operation of detecting the liquid, which will be described in detail below.

FIG. 7 is a flowchart of a liquid detecting method of a robot cleaner when the robot cleaner is travelling to clean liquid according to an embodiment. FIG. 7 illustrates operations to be performed by the robot cleaner 100 when it is identified that the robot cleaner 100 is close to the liquid (operation S470-Y in FIG. 4).

In operation S710, when the robot cleaner 100 is performing a cleaning run for liquid, the processor 133 may control the robot cleaner 100 to clean the liquid. For example, the processor 133 may control the driver 120 to cause the robot cleaner 100 to move to an area with liquid based on a distance between the robot cleaner 100 and the liquid, and perform cleaning of the area using a mop or the like. In this case, the cleaning operation may include an operation in which the robot cleaner 100 passes by the area with the liquid while cleaning the area with the liquid using the mop or the like, or an operation in which the robot cleaner 100 moves to the area with the liquid and then cleans the area with the liquid and an area surrounding the area using the mop or the like.

In operation S720, once the cleaning of the liquid is completed, the processor 133 may perform the operation of detecting liquid based on the currently set period in the second mode. For example, once the cleaning of the area with the liquid is completed, the robot cleaner 100 may move in the same direction in which the robot cleaner 100 was moving before approaching the liquid. In other words, when the liquid is detected along the path, the robot cleaner 100 may perform the cleaning of the area with the liquid, and move along the path.

In this case, the processor 133 may perform the operation of detecting liquid based on the currently set period in the second mode. In this case, the currently set period in the second mode may be a period during which the robot cleaner 100 was performing the liquid detecting operation when the robot cleaner 100 was close to the liquid.

For example, referring to FIGS. 6B, 6C, and 6D, the robot cleaner 100 may sequentially change the period during which the robot cleaner 100 performs the operation of detecting liquid in the second mode to T₁ , T₂ ,..., Tₙ₋₁ until the robot cleaner 100 becomes close to the liquid. In this case, when it is identified that the robot cleaner 100 is close to the liquid, the value of the period set in the second mode is Tₙ₋₁. Accordingly, after performing cleaning of the area with the liquid, the robot cleaner 100 may perform the operation of detecting liquid every Tₙ₋₁ (ms), and may move.

In operation S730, the processor 133 may identify whether the robot cleaner 100 has traveled a preset distance.

For example, the processor 133 may identify a distance traveled by the robot cleaner 100 using, for example, the number of rotations of the wheels, and may identify, based on the identified distance, whether the robot cleaner 100 has traveled a preset distance from the area where the liquid was present.

In operations S730-Y, S750, and S760, when the robot cleaner 100 has traveled a preset distance after completing cleaning of the liquid, the processor 133 may change the mode of the robot cleaner 100 to the first mode, and perform the operation of detecting liquid in the first mode.

For example, when the robot cleaner 100 completes cleaning of the liquid, the processor 133 may perform the operation of detecting liquid every Tₙ₋₁ (ms). In this case, the robot cleaner 100 may perform the operation of detecting liquid every Tₙ₋₁ (ms) while traveling a preset distance from the area where the liquid was present. Subsequently, when the robot cleaner 100 moves a preset distance from the area where the liquid was present, the processor 133 may change the mode of the robot cleaner 100 to the first mode, and perform the operation of detecting liquid every T₀ (ms). In this case, T₀ may be a set period in the first mode.

When liquid is detected again before traveling the preset distance, the robot cleaner 100 may perform cleaning of the liquid and move. In this case, the robot cleaner 100 may perform the operation of detecting liquid in the second mode again before traveling the preset distance, and after traveling the preset distance, may change the mode of the robot cleaner 100 to the first mode.

In an embodiment, the robot cleaner 100 may perform a cleaning run for liquid. In this case, there is a high possibility that there is another liquid near the area where the liquid was detected. Therefore, while the robot cleaner 100 moves a certain distance after cleaning the liquid, the robot cleaner 100 may maintain a period set in the second mode to perform the operation of detecting liquid, and after moving the certain distance, may perform the operation of detecting liquid in the first mode again. Accordingly, the liquid detection efficiency of the robot cleaner 100 may be increased.

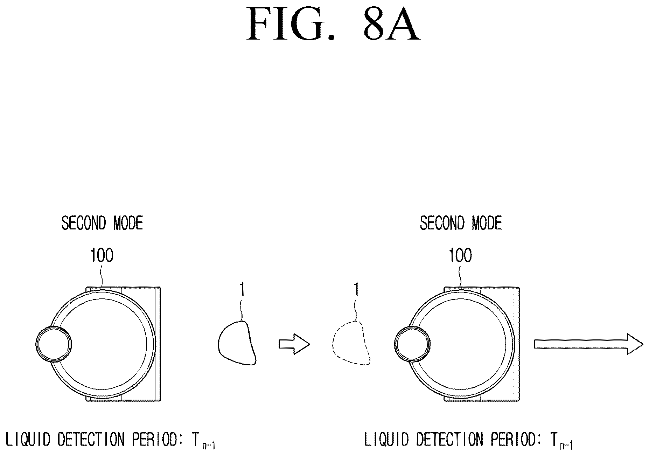

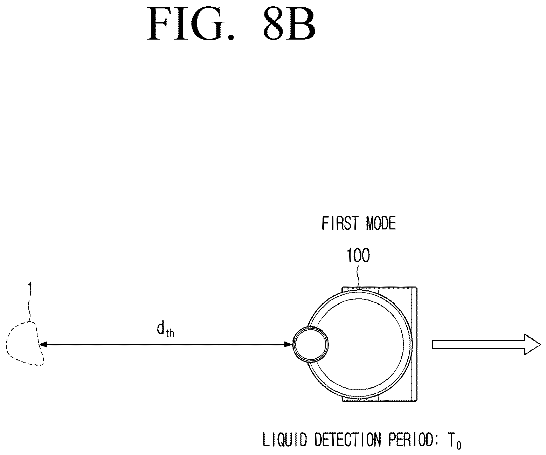

FIGS. 8A and 8B are views provided to explain an example of an operation in which a robot cleaner detects liquid according to an embodiment.

Referring to FIG. 8A, the robot cleaner 100 may be close to the liquid 1. In this case, the period during which the robot cleaner 100 performs the operation of detecting liquid may be Tₙ₋₁ (ms).

The robot cleaner 100 may perform cleaning of the liquid 1, and move while performing the operation of detecting liquid at a period of Tₙ₋₁ (ms) in the second mode. Subsequently, as shown in FIG. 8B, when the robot cleaner 100 moves a preset distance (e.g., dₜₕ) from the area where the liquid 1 was present, the robot cleaner 100 may change the mode of the robot cleaner 100 to the first mode, and may move while performing the operation of detecting liquid at a period of T₀ (ms) in the first mode.

FIG. 9 is a flowchart of a liquid detecting method of a robot cleaner when the robot cleaner is travelling to avoid liquid according to an embodiment. FIG. 9 illustrates operations to be performed by the robot cleaner 100 when it is identified that the robot cleaner 100 is close to the liquid (operation S470-Y in FIG. 4).

In operation S910, when the robot cleaner 100 is performing an avoidance run for liquid, the processor 133 may control the driver 120 to change the traveling direction of the robot cleaner 100. For example, the processor 133 may control the driver 120 to change the direction of the robot cleaner 100 to the left or right, and to move the robot cleaner 100 to a location that is a certain distance away from the current location. Subsequently, the processor 133 may control the driver 120 to change the direction of the robot cleaner 100 to the left or right. Accordingly, the front of the robot cleaner 100 may be in a direction opposite to the direction in which the liquid was detected.

In operation S920, the processor 133 may perform the operation of detecting liquid using the currently set period in the second mode while the traveling direction of the robot cleaner 100 is changed. In this case, the currently set period in the second mode may be a period during which the robot cleaner 100 was performing the operation of detecting liquid when the robot cleaner 100 was close to the liquid.

For example, referring to FIGS. 6B, 6C, and 6D, the robot cleaner 100 may sequentially change the period during which the robot cleaner 100 performs the operation of detecting liquid to T₁, T₂, ..., Tₙ₋₁ until the robot cleaner 100 becomes close to the liquid in the second mode. In this case, when it is identified that the robot cleaner 100 is close to the liquid, the value of the period set in the second mode is Tₙ₋₁. Accordingly, the robot cleaner 100 may perform the operation of detecting liquid every Tₙ₋₁ (ms) while changing the traveling direction.

In operation S930, when the robot cleaner 100 changes the traveling direction and moves in a direction away from the liquid, the processor 133 may change the mode of the robot cleaner 100 to the first mode, and perform the operation of detecting liquid in the first mode.

For example, when the traveling direction of the robot cleaner 100 is changed, the processor 133 may control the driver 120 to move the robot cleaner 100 in a direction away from the liquid. Accordingly, the robot cleaner 100 may move in a direction away from the liquid along a path that is a certain distance away from the path along which the liquid was detected. As such, the robot cleaner 100 may travel in a zigzag pattern.

In this case, the processor 133 may change the mode of the robot cleaner 100 to the first mode, and perform the operation of detecting liquid in the first mode.

For example, the robot cleaner 100 may perform the operation of detecting liquid every Tₙ₋₁ (ms) while changing the traveling direction. Subsequently, when the robot cleaner 100 moves in a direction away from the liquid after the change of the traveling direction is completed, the robot cleaner 100 may change the mode of the robot cleaner 100 to the first mode, and perform the operation of detecting liquid every T₀ (ms). In this case, T₀ may be a period set in the first mode.

In operation S940, when the robot cleaner 100 is moved in the direction of the liquid, the processor 133 may identify a distance between the robot cleaner 100 and the liquid.

For example, when an obstacle is detected in the front of the robot cleaner 100 while the robot cleaner 100 is moving in a direction away from the liquid, the robot cleaner 100 may change the traveling direction again so that the robot cleaner 100 travels in the direction of the liquid along a path that is a certain distance away from the path that the robot cleaner 100 traveled in the direction away from the liquid. In other words, the robot cleaner 100 may travel in a zigzag pattern to move in the direction of the liquid. In this case, the robot cleaner 100 may move while performing the operation of detecting liquid in the first mode.

The processor 133 may identify a distance between the robot cleaner 100 and a liquid while the robot cleaner 100 is moving in the direction of the liquid. For example, the processor 133 may identify the distance between the robot cleaner 100 and the liquid based on the location of the robot cleaner 100 and the location of the liquid stored in the memory 132.

In operations S950-Y, S960, and S970, when the distance between the robot cleaner 100 and the liquid is a preset distance, the processor 133 may change the mode of the robot cleaner 100 to the second mode. The processor 133 may perform the operation of detecting liquid in the second mode.

For example, the robot cleaner 100 may perform the operation of detecting liquid every T₀ (ms) in the first mode and move in the direction of the liquid. In this case, T₀ may be a set period in the first mode. Subsequently, when the distance between the robot cleaner 100 and the liquid is a preset distance, the robot cleaner 100 may change the mode of the robot cleaner 100 to the second mode, and move while performing the operation of detecting liquid in the second mode. For example, the processor 133 may identify a distance range to which the distance between the robot cleaner 100 and the liquid belongs among a plurality of distance ranges based on information about a plurality of period values corresponding to the plurality of distance ranges stored in the memory 132. Subsequently, the processor 133 may set a period value corresponding to the identified distance range as a period of the operation of detecting liquid in the second mode, and may perform the operation of detecting liquid based on the set period. Accordingly, the robot cleaner 100 may perform the operation of detecting liquid at increasingly shorter intervals as it becomes closer to an area with the liquid.

When the traveling direction of the robot cleaner 100 that was moving away from the liquid is changed and the robot cleaner 100 moves in the direction of the liquid, the processor 133 may change the mode of the robot cleaner 100 to the second mode based on the distance between the robot cleaner 100 and the liquid, and perform the operation of detecting liquid in the second mode.

When liquid is detected while the robot cleaner 100 is moving in the direction of the liquid, the processor 133 may perform a liquid avoidance run again. When no liquid is detected while the robot cleaner 100 is moving in the direction of the liquid, the processor 133 may change the mode of the robot cleaner 100 to the first mode. For example, when the robot cleaner 100 moves away from the liquid by a preset distance, the processor 133 may change the mode of the robot cleaner 100 to the first mode.

In an embodiment, the robot cleaner 100 may perform an avoidance run for liquid. In this case, there is a high possibility that there is another liquid near the area where the liquid was detected. Thus, when the robot cleaner 100 moves again in the direction of the liquid after avoiding the liquid, the robot cleaner 100 may change the mode of the robot cleaner 100 to the second mode based on the distance between the robot cleaner 100 and the liquid, and perform the operation of detecting liquid in the second mode. Accordingly, the liquid detection efficiency of the robot cleaner 100 may be increased.

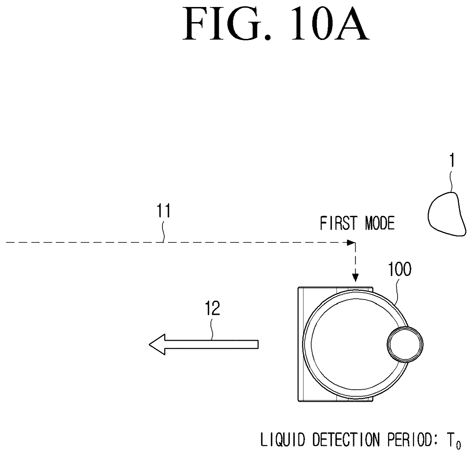

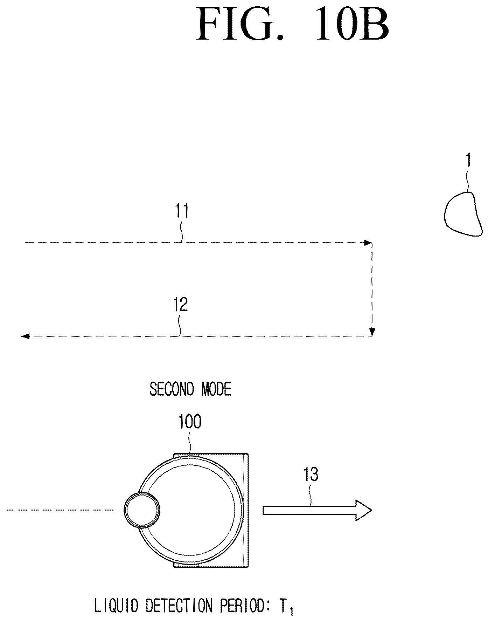

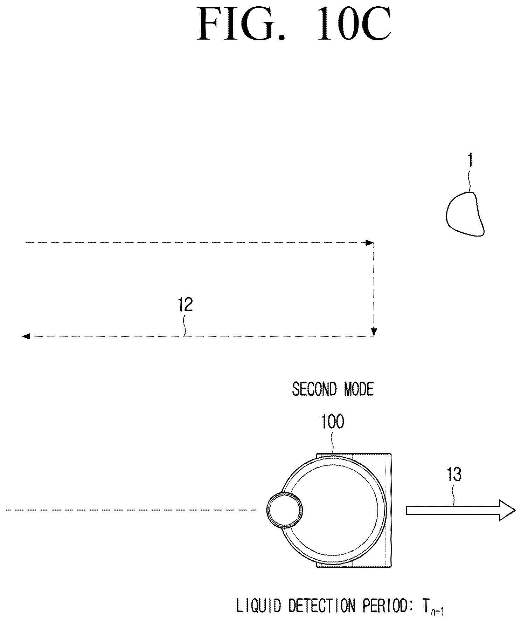

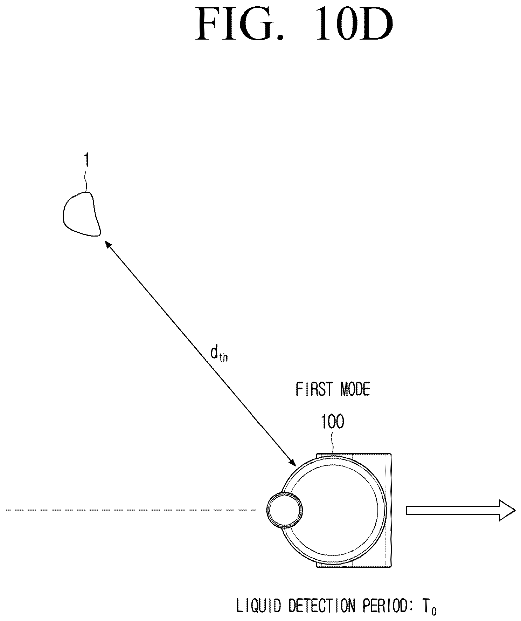

FIGS. 10A, 10B, 10C, and 10D are views provided to explain an example of an operation in which a robot cleaner detects liquid according to an embodiment.

Referring to FIG. 10A, the robot cleaner 100 may move while performing the operation of detecting liquid at a period of Tₙ₋₁ (ms) in the second mode to be close to the liquid 1. In this case, the robot cleaner 100 may change the traveling direction to avoid the liquid 1. The robot cleaner 100 may move in a direction away from the liquid 1 along a path 12 that is a certain distance away from a path 11 along which the robot cleaner 100 traveled. In this case, the robot cleaner 100 may change the mode of the robot cleaner 100 to the first mode, and move while performing the operation of detecting liquid at a period of T₀ (ms) in the first mode.

Referring to FIGS. 10B and 10C, when an obstacle is detected in the front of the robot cleaner 100 while moving in a direction away from the liquid 1, the robot cleaner 100 may change the traveling direction to move in the direction of the liquid 1 along a path 13. In this case, the path 13 may be a path that is a certain distance away from the path 12 along which the robot cleaner 100 traveled in a direction away from the liquid 1. When it is identified that the distance from the liquid is a preset distance while traveling along the path 13, the robot cleaner 100 may change the mode of the robot cleaner 100 to the second mode, and move while performing the operation of detecting liquid in the second mode. In this case, depending on the distance between the robot cleaner 100 and the liquid, the period during which the robot cleaner 100 performs the operation of detecting liquid may be sequentially changed to T₁, T₂ ,..., Tₙ₋₁.

As shown in FIG. 10D, when the robot cleaner 100 moves a preset distance (e.g., dₜₕ) from the area where the liquid 1 is present, the robot cleaner 100 may change the mode of the robot cleaner 100 to the first mode, and perform the operation of detecting liquid at a period of T₀ (ms) in the first mode.

In the disclosure, the IR receiver 112 may be an IR receiver constituting a depth sensor. The depth sensor may obtain depth information about an object around the robot cleaner 100. For example, the depth sensor may output IR light to the front of the robot cleaner 100, and when the output IR light is reflected and received by an object, the depth information about the object may be obtained using the received IR light. The depth information may include information about the distance between the robot cleaner 100 and the object. The depth sensor may be implemented in various ways such as a stereo method, a time of flight (TOF) method, and the like.

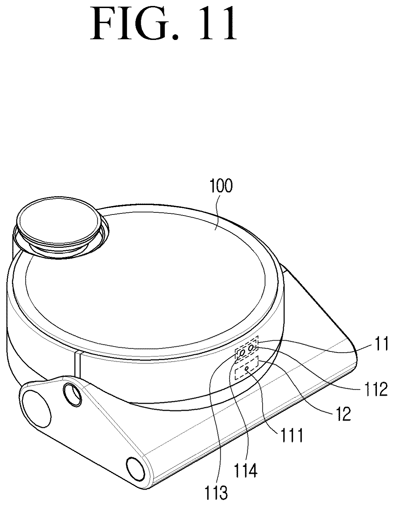

For example, referring to FIG. 11, a depth sensor 113 may include an IR light source 114 and an IR receiver 112.

Hereinafter, the IR light source 114 for obtaining depth information will be referred to as the first IR light source 114 and the IR light source 111 for detecting liquid will be referred to as the second IR light source 111.

The first IR light source 114 may output IR light. For example, the first IR light source 114 may include an IR LED or laser or the like for outputting IR light. The first IR light source 114 may output IR light to the front of the robot cleaner 100.

The robot cleaner 100 may output IR light using the first IR light source 114, and when the output IR light is reflected by an external object and received by the IR receiver 112, the received IR light may be used to obtain depth information about the object. The robot cleaner 100 may detect the object using the depth information.

In an embodiment, the robot cleaner 100 may output IR light using the second IR light source 111, and when the output IR light is reflected by an external object and received by the IR receiver 112, the received IR light may be used to detect liquid on the floor.

The depth sensor 113 may be disposed in an upper area 11 of the front of the body of the robot cleaner 100, and the second IR light source 111 may be disposed in a lower area 12 of the front of the body of the robot cleaner 100.

In an embodiment, when the robot cleaner 100 is equipped with the depth sensor 113 for obtaining depth information, the second IR light source 111 may be added to the robot cleaner 100, and liquid on the floor may be detected by using the second IR light source 111 and the IR receiver 112 of the depth sensor 113, so it is possible to reduce the manufacturing cost of the robot cleaner 100.

In an embodiment, the robot cleaner 100 may include the first IR light source 114 for obtaining depth information and the second IR light source 111 for detecting liquid on the floor.

The processor 133 may allow the robot cleaner 100 to obtain depth information, and may control the overall operations for detecting liquid on the floor.

The processor 133 may use the depth sensor 113 to obtain depth information about an object around the robot cleaner 100, and may use the second IR light source 111 and the IR receiver 112 to detect liquid on the floor around the robot cleaner 100.

The operation of obtaining depth information may include an operation of obtaining depth information about an object around the robot cleaner 100. For example, the processor 133 may output IR light to the front of the robot cleaner 100 using the first IR light source 114. In this case, the second IR light source 111 may be in an off state. Subsequently, the processor 133 may photograph the front of the robot cleaner 100 using the IR receiver 112, and generate a depth image including depth information using the IR light received by the IR receiver 112. Accordingly, the processor 133 may use the depth information to detect an object in front of the robot cleaner 100.

The operation of detecting liquid may include an operation of identifying whether there is liquid on the floor in front of the robot cleaner 100. For example, the processor 133 may output IR light to the front of the robot cleaner 100 using the second IR light source 111. In this case, the first IR light source 114 may be in an off state. Subsequently, the processor 133 may photograph the front of the robot cleaner 100 using the IR receiver 112, obtain an IR image using the IR light received by the IR receiver 112, and identify whether there is liquid on the floor in front of the robot cleaner 100 based on the IR image.

The processor 133 may identify a ratio between the number of times performing the operation of obtaining depth information and the number of times performing the operation of detecting liquid, and may perform the operation of obtaining depth information and the operation of detecting liquid based on the identified ratio.

According to an embodiment, the processor 133 may identify a ratio between the number of times the robot cleaner 100 performs the operation of obtaining depth information and the number of times the robot cleaner 100 performs the operation of detecting liquid based on the area in which the robot cleaner 100 is located within the space.

For example, the processor 133 may identify a ratio corresponding to the area in which the robot cleaner 100 is located among a plurality of ratios corresponding to a plurality of areas within the space, and determine the identified ratio as a ratio between the number of times the robot cleaner 100 performs the operation of obtaining depth information and the number of times the robot cleaner 100 performs the operation of detecting liquid.

The space may include a plurality of areas. The areas may be separated from other areas by walls or other obstacles (e.g., door frames, windows, etc.). The areas may correspond to a kitchen, a living room, a bathroom, a room, and the like. When an area is connected to other areas through an entrance of the area, the other areas may be divided into areas within a preset distance from the entrance and the remaining areas. In this case, the areas within the preset distance from the entrance of the area may be referred to as areas adjacent to the area.

For example, a ratio value corresponding to each of the plurality of areas may be stored in the memory 132. In this case, the ratio values corresponding to each of the plurality of areas may be stored in the memory 132 in the form of a lookup table.

According to an embodiment, the ratio for the first area may be set to 1:N₁. For example, the first area may include a bathroom and a kitchen. In an embodiment, the ratio for the second area may be set to 1:N₂. The second area may include an area adjacent to the first area. For example, the second area may include an area adjacent to the bathroom or the kitchen within the space. According to an embodiment, within the space, the bathroom or the kitchen may be connected to a room or a living room via an entrance. In this case, the second area may include a portion of the room or living room that is within a preset distance from the entrance of the bathroom or kitchen. Further, the ratio for the third area may be set to 1:N₃. For example, when the bathroom or the kitchen is not connected to the room or the living room, the third area may include the entire area of the room or living room. In an embodiment, when the bathroom or the kitchen is connected to the room or the living room, the third area may include the remaining area excluding the area adjacent to the bathroom or the kitchen among the entire area of the room or living room.

In this case, the ratio may mean a ratio between the number of times the robot cleaner 100 performs the operation of obtaining depth information in an area and the number of times the robot cleaner 100 performs the operation of detecting liquid. Also, N₃ < N₂ < N₁.

The processor 133 may identify an area in which the robot cleaner 100 is located among a plurality of areas within the space. In this case, identifying the area may include identifying a name of the area (e.g., bathroom, kitchen, room, living room, etc.).

For example, a user may control the robot cleaner 100 using an application installed on a mobile device.

According to an embodiment, the user may, by executing the application installed on the mobile device, connect to a server, create a user account, and communicate with the server based on the logged-in user account to register the robot cleaner 100. The server may register the robot cleaner 100 with the user account by listing identification information of the robot cleaner 100 (e.g., serial number or medium access control (MAC) address, etc.) in the user account.

Subsequently, the user may control the robot cleaner 100 using the application installed on the mobile device. For example, the mobile device may display a user interface (UI) screen associated with the robot cleaner 100 in the user account. In this case, the UI screen may include a map of a space in which the robot cleaner 100 is located. The user may enter a user input on the mobile device to set a name for each of the plurality of areas on the map. The server may receive the user input from the mobile device, and transmit information about the names of the areas set based on the user input to the robot cleaner 100. Accordingly, the processor 133 may identify a location of the robot cleaner 100 on the map, and identify the area in which the robot cleaner 100 is located.

However, the disclosure is not limited thereto, and the processor 133 may use an image obtained using a camera (e.g., an RGB camera) to identify an area where the robot cleaner 100 is located. For example, the memory 132 may store an artificial intelligence model. The artificial intelligence model may include a neural network model trained to predict the type of an object in the image. The artificial intelligence model may include a neural network model consisting of model parameters that are trained by applying images as input data and the types of objects included in the images as output answer values.

The processor 133 may obtain an image by photographing the surroundings of the robot cleaner 100 using a camera, and by inputting the obtained image to an artificial intelligence model, obtain information about the type of an object included in the image from the artificial intelligence model.

Subsequently, the processor 133 may identify an area in which the robot cleaner 100 is located based on the type of object.

For example, when the type of object detected in the image is "bathtub," "washstand," or the like, the processor 133 may identify the robot cleaner 100 as being located in a bathroom. In an embodiment, when the type of object detected in the image is "sink," "dining table," "refrigerator," or the like, the processor 133 may identify the robot cleaner 100 as being located in a kitchen. When the type of object detected in the image is "bed," "closet," or the like, the processor 133 may identify the robot cleaner 100 as being located in a room. In an embodiment, when the type of object detected in the image is "couch," "TV," or the like, the processor 133 may identify the robot cleaner 100 as being located in a living room. In an embodiment, when the robot cleaner 100 identifies an "entrance" of the kitchen or bathroom in the vicinity of the kitchen or bathroom, the processor 133 may identify the robot cleaner 100 as being located in an area near the kitchen or bathroom.

The processor 133 may identify a ratio corresponding to the identified area as a ratio between the number of times performing the operation of obtaining depth information and the number of times performing the operation of detecting liquid, and may perform the operation of obtaining depth information and the operation of detecting liquid based on the identified ratio.

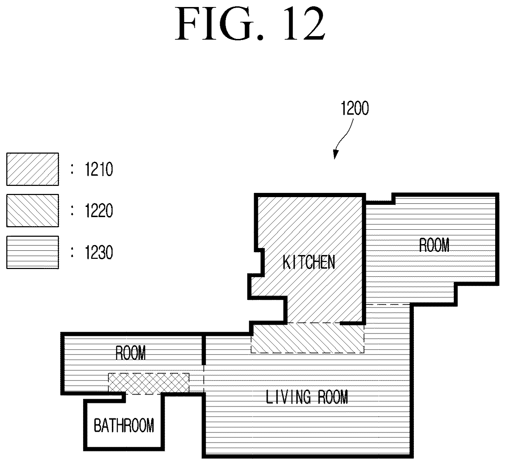

For example, referring to FIG. 12, a map 1200 may include a first area 1210, a second area 1220, and a third area 1230.

When the robot cleaner 100 is located in the first area 1210, the processor 133 may identify that a first ratio (e.g., 1: N₁) corresponding to the first area 1210 is a ratio between the number of times the robot cleaner 100 performs the operation of obtaining depth information and the number of times the robot cleaner 100 performs the operation of detecting liquid. When the robot cleaner 100 is located in the second area 1220, the processor 133 may identify that a second ratio (e.g., 1: N₂) corresponding to the second area 1220 is a ratio between the number of times the robot cleaner 100 performs the operation of obtaining depth information and the number of times the robot cleaner 100 performs the operation of detecting liquid. When the robot cleaner 100 is located in the third area 1230, the processor 133 may identify that a third ratio (e.g., 1: N₃) corresponding to the third area 1230 is a ratio between the number of times the robot cleaner 100 performs the operation of obtaining depth information and the number of times the robot cleaner 100 performs the operation of detecting liquid. In this case, N₃ < N₂ < N₁.

The processor 133 may perform the operation of obtaining depth information and the operation of detecting liquid on the floor based on the identified ratio.

For example, when the identified ratio is M₁ :M₂, the processor 133 may perform the operation of obtaining depth information M₁ times and the operation of detecting liquid M₂ times within one period, and may perform these operations repeatedly for a plurality of periods. In this case, M₁ and M₂ are natural numbers.

In this case, the processor 133 may first perform the operation of obtaining depth information M₁ times and then perform the operation of detecting liquid M₂ times within one period. Further, the processor 133 may first perform the operation of detecting liquid M₂ times and then perform the operation of obtaining depth information M₁ times within one period. In an embodiment, the processor 133 may alternate between these operations within one period, or may perform a portion of the number of times of one operation first, perform a full number of times of another operation, and then perform the remaining number of times of the one operation within one period.

In the example of FIG. 12 described above, when the robot cleaner 100 is located in the first area 1210, the processor 133 may perform the operations of obtaining depth information and the operation of detecting liquid based on a first ratio (e.g., 1: N₁) corresponding to the first area 1210.

When the robot cleaner 100 is located in the second area 1220, the processor 133 may perform the operation of obtaining depth information and the operation of detecting liquid based on a second ratio (e.g., 1: N₂) corresponding to the second area 1220.

When the robot cleaner 100 is located in the third area 1230, the processor 133 may perform the operation of obtaining depth information and the operation of detecting liquid based on a third ratio (e.g., 1: N₃) corresponding to the third area 1230.

In this case, N₃ < N₂ < N₁. Accordingly, the number of times the robot cleaner 100 performs the liquid detecting operation according to the first ratio corresponding to the first area 1210 (e.g., 1: N₁) is greater than the number of times the robot cleaner 100 performs the liquid detecting operation according to the second ratio corresponding to the second area 1220 (e.g., 1: N₂). Further, the number of times the robot cleaner 100 performs the liquid detecting operation according to the second ratio corresponding to the second area 1220 (e.g., 1: N₂) is greater than the number of times the robot cleaner 100 performs the liquid detecting operation according to the third ratio corresponding to the third area 1230 (e.g., 1: N₃).

For example, N₁=3, N₂ =2, and N₃ =1. In other words, the ratio corresponding to the first area is 1:3, the ratio corresponding to the second area is 1:2, and the ratio corresponding to the third area is 1:1.

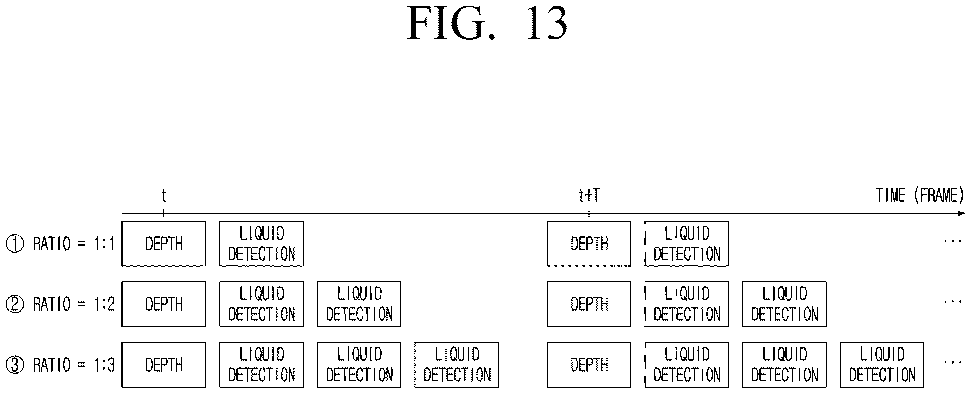

Referring to FIG. 13, the processor 133 may obtain depth information about an object at a certain time interval (e.g., T). For example, at time t, the processor 133 may output IR light using the first IR light source 114 and perform photographing using the IR receiver 112. Subsequently, the processor 133 may use the IR light received via the IR receiver 112 to obtain depth information about the object. Then, at time t+T, the processor 133 may output IR light using the first IR light source 114 and perform photographing using the IR receiver 112. Subsequently, the processor 133 may obtain depth information about the object using the IR light received via the IR receiver 112. T may be, for example, 100 ms. In other words, the IR receiver 112 may perform photographing at 10 frames per second (FPS). However, the disclosure is not limited thereto. For example, 100 ms may be a minimum period of time that the robot cleaner 100 navigates its surroundings using the depth sensor 110 to stably travel through the space. However, the disclosure is not limited thereto, and T may include, for example, 50 ms, 33 ms, etc.

When the ratio between the number of times performing the operation of obtaining depth information and the number of times performing the operation of detecting liquid is 1:1, the processor 133 may perform the operation of obtaining depth information once and the operation of detecting liquid once within one period (the 'RATIO 1:1' row in FIG. 13). When the ratio between the number of times performing the operation of obtaining depth information and the number of times performing the operation of detecting liquid is 1:2, the processor 133 may perform the operation of obtaining depth information once and the operation of detecting liquid twice within one period (the 'RATIO 1:2' row in FIG. 13). When the ratio between the number of times performing the operation of obtaining depth information and the number of times performing the operation of detecting liquid is 1:3, the processor 133 may perform the operation of obtaining depth information once and the operation of detecting liquid three times within one period (the 'RATIO 1:3' row in FIG. 13).

In general, liquid is more likely to be detected on the floor of a bathroom and a kitchen. Therefore, in the disclosure, when the robot cleaner 100 is in a bathroom and a kitchen, the ratio for areas may be set such that the liquid detecting operation is performed frequently. In an embodiment, areas adjacent to the bathroom and the kitchen are also more likely to detect liquid than other areas. Therefore, in the disclosure, when the robot cleaner 100 is near the bathroom and kitchen, the ratio for areas may be set such that the robot cleaner 100 performs the liquid detecting operations more frequently, but less than when the robot cleaner 100 is in the bathroom and the kitchen. The robot cleaner 100 may optimally perform the liquid detecting operations, thereby effectively detecting liquid while reducing power consumption of the sensor and reducing consumption of resources.

According to an embodiment, the processor 133 may update a ratio for an area based on the number of times that liquid is detected in the area within the space.

Updating the ratio corresponding to the area may include adjusting the ratio corresponding to the area such that the robot cleaner 100 performs more or less of the operation of detecting liquid in the area than the ratio currently set for the area.

For example, when the number of times liquid is detected in an area is high, the robot cleaner 100 may perform the operation of detecting liquid in the area more frequently, and when the number of times liquid is detected in the area is low, the ratio corresponding to the area may be updated such that the robot cleaner 100 performs the operation of detecting liquid less frequently.

The processor 133 may perform the operation of detecting liquid while the robot cleaner 100 performs a cleaning operation, and when liquid is detected on the floor, may update history information stored in the memory 132.

The history information may include information about a time (e.g., date, time, etc.), number of times, etc. that liquid was detected by the robot cleaner 100 in each of a plurality of areas. When liquid is detected in an area, the processor 133 may update the history information by adding the time, number of times, etc. that the liquid was detected in the history information.

Subsequently, the processor 133 may update the ratio corresponding to the area based on the history information.

For example, the processor 133 may identify the number of times liquid was detected in the area in a time interval from a first point in time to a second point in time based on the history information. The first time point may be a past time point. The second time point may be a current time point. The past time point may be a point in time before a preset time from the present time point.

When the identified number of times is greater than a first reference value, the processor 133 may adjust the ratio corresponding to the area such that the robot cleaner 100 performs the operation of detecting liquid in the area more frequently. When the identified number of times is greater than a second reference value and less than the first reference value, the processor 133 may maintain the ratio corresponding to the current area. When the identified number times is less than the second reference value, the processor 133 may update the ratio corresponding to the area such that the robot cleaner 100 performs the operation of detecting liquid in the area less frequently. In this case, the first reference value may be greater than the second reference value. Further, the first reference value and the second reference value may differ from each other depending on the ratio corresponding to the area.

For example, the ratio corresponding to the area is 1:N₂. In this case, when the identified number times is greater than the first reference value, the processor 133 may adjust the ratio corresponding to the area to 1:N₁, and when the identified number of times is less than the second reference value, may adjust the ratio corresponding to the area to 1:N₃. In this case, N₃ < N₂ < N₁.

In an embodiment, the exposure time of the IR receiver 112 may be set differently in order to adjust a detection range depending on whether an object is near or far. For example, when obtaining depth information for an object in a near distance, the robot cleaner 100 may set the exposure time of the IR receiver 112 (e.g., camera) to exp_time 1 (=exp_time), and when obtaining depth information for an object in a far distance, may set the exposure time of the IR receiver 112 (e.g., camera) to exp_time 2 (=exp_time×a). In this case, a is a constant, and exp_time 1 may be less than exp_time 2.

As described above, the robot cleaner 100 may use the first IR light source 114 to obtain depth information and the second IR light source 111 to detect liquid on the floor. In this case, the intensity of the light output from the first IR light source 114 and the second IR light source 111 may be different. In this case, the exposure time of the IR receiver 112 (e.g., camera) may be set according to the light intensity. For example, the intensity of the light output from the second IR light source 111 is less than the intensity of the light output from the first IR light source 114. In this case, the robot cleaner 100 may set the exposure time of the IR receiver 112 (e.g., camera) to exp_time 3 (=exp_time×b) when detecting the liquid. Here, b is a constant, and exp_time 3 may be greater than exp_time 1 .

In the above-described embodiments, it has been described that the ratios corresponding to the areas are set during the manufacturing stage of the robot cleaner 100. However, the ratios corresponding to the areas may be set based on a user input or history information.

According to an embodiment, the ratio corresponding to an area may be determined based on a user input. Based on the user input, the processor 133 may identify a ratio between the number of times performing the operation of obtaining depth information and the number of times performing the operation of detecting liquid.

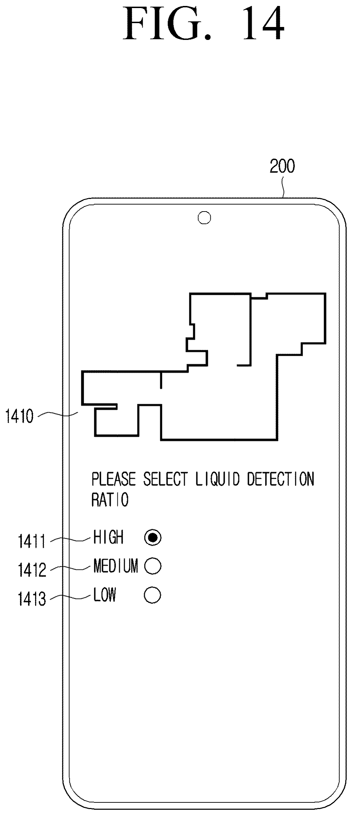

For example, referring to FIG. 14, a mobile device 200 may display a UI screen 1410 for setting a ratio. According to an embodiment, upon receiving a user input to select an area on a map, the mobile device 200 may display graphic user interface (GUI) elements for setting a ratio for the selected area. For example, the GUI elements may include high 1411, moderate 1412, and low 1413. The user may enter a user input on the mobile device 200 to select one of the GUI elements. A server may receive the user input from the mobile device, and transmit a control instruction corresponding to the user input to the robot cleaner 100.

The processor 133 may determine the ratio corresponding to the area based on the control instruction received from the server.

For example, when the user selects the ratio for the area as high 1411, the processor 133 may set the ratio for the area to 1:N₁. When the user selects the ratio for the area as moderate 1412, the processor 133 may set the ratio for the area to 1:N₂. When the user selects the ratio for the area to be low 1413, the processor 133 may set the ratio for the area to 1:N₃. In this case, the ratio may mean a ratio between the number of times the robot cleaner 100 performs the operation of obtaining depth information and the number of times the robot cleaner 100 performs the operation of detecting liquid. Also, N₃ < N₂ < N₁.

According to an embodiment, the ratio corresponding to the area may be determined based on the history information. Based on the history information, the processor 133 may identify a ratio between the number of times performing the operation of obtaining depth information and the number of times performing the operation of detecting liquid.

For example, the processor 133 may identify, based on the history information, the number of times liquid was detected in the area in a time interval from a first point in time to a second point in time. The first time point may be a past time point. The second time point may be a current time point. The past time point may be a point in time before a preset time from the present time point.

Subsequently, the processor 133 may identify a range to which the identified number of times belongs among a plurality of ranges, and may identify a ratio corresponding to the identified range as the ratio corresponding to the area. In this case, information about the ratio corresponding to each of the plurality of ranges may be stored in the memory 132.

For example, the ratio corresponding to a first range is 1:N₁, the ratio corresponding to the second range is 1:N₂, and the ratio corresponding to the third range is 1:N₃. In this case, the lower limit value of the first range may be greater than or equal to the upper limit value of the second range. Also, the lower limit value of the second range may be greater than or equal to the upper limit value of the third range. Here, N₃ < N₂ < N₁.

In this case, when the identified number of times falls within the first range, the processor 133 may identify that the ratio corresponding to the area is 1: N₁. When the identified number of times falls within the second range, the processor 133 may identify that the ratio corresponding to the area is 1: N₂. When the identified number of times falls within the third range, the processor 133 may identify that the ratio corresponding to the area is 1: N₃.

In an embodiment, the robot cleaner 100 may perform the operation of detecting liquid in the first mode.

The first mode may include a mode in which the ratio between the number of times the robot cleaner 100 performs the operation of obtaining depth information and the number of times the robot cleaner 100 performs the operation of detecting liquid is a fixed value. When the mode of the robot cleaner 100 is the first mode, the robot cleaner 100 may identify a ratio corresponding to an area in which the robot cleaner 100 is located, and may perform the operation of obtaining depth information and the operation of detecting liquid based on the identified ratio.

When liquid is detected while the robot cleaner 100 is performing the operation of detecting liquid in the first mode, the robot cleaner 100 may change the mode of the robot cleaner 100 to the second mode.

The second mode may include a mode in which the ratio between the number of times the robot cleaner 100 performs the operation of obtaining depth information and the number of times the robot cleaner 100 performs the operation of detecting liquid changes based on a distance between the robot cleaner 100 and the liquid.

In this case, the ratio may be adjusted such that the closer the robot cleaner 100 is to the liquid, the more liquid detecting operations are performed, and the further the robot cleaner 100 is from the liquid, the less liquid detecting operations are performed.

When the robot cleaner 100 moves in a direction where liquid is present, the robot cleaner 100 may get closer to the liquid. The processor 133 may adjust the ratio such that as the robot cleaner 100 is close to the liquid, the robot cleaner 100 performs the operation of detecting liquid more frequently. Additionally, as the robot cleaner 100 moves in a direction opposite to the liquid, the robot cleaner 100 may move away from the liquid. The processor 133 may adjust the ratio such that as the robot cleaner 100 moves away from the liquid, the robot cleaner 100 performs the operation of detecting liquid less frequently.

When liquid is detected in front of the robot cleaner 100, the processor 133 may identify a distance between the detected liquid and the robot cleaner 100. For example, the processor 133 may use an IR image to identify the distance between the robot cleaner 100 and the liquid.

Subsequently, the processor 133 may identify the ratio based on the distance between the robot cleaner 100 and the liquid.

For example, the memory 132 may store a ratio value corresponding to each of a plurality of distance ranges between the robot cleaner 100 and the liquid in each of a plurality of areas. In this case, the ratio values corresponding to the distance ranges may be stored in the memory 132 in the form of a lookup table.

For example, the plurality of areas may include a first area, a second area, and a third area.

When the robot cleaner 100 is in the first area, the memory 132 may store a plurality of ratio values corresponding to a plurality of distance ranges. For example, the memory 132 may store a ratio value (1:N_{1,1}) corresponding to a distance range where the distance between the robot cleaner 100 and the liquid is less than d₁ and greater than d₂, a ratio value (1:N_{1,2}) corresponding to a distance range where the distance between the robot cleaner 100 and the liquid is less than d₂ and greater than d₃, ...., a ratio value (1:N_{1,n-1}) corresponding to a distance range between the robot cleaner 100 and the liquid where the distance between the robot cleaner 100 and the liquid is less than dₙ₋₁ and greater than dₙ. Here, N is a natural number greater than 1, and dₙ <dₙ₋₁ <...<d₂ <d₁. Also, N_{1,1} < N_{1,2} <...< N_{1,n-2} < N_{1,n-1}.

When the robot cleaner 100 is in the second area, the memory 132 may store a plurality of ratio values corresponding to a plurality of distance ranges. For example, the memory 132 may store a ratio value (1:N_{2,1}) corresponding to a distance range where the distance between the robot cleaner 100 and the liquid is less than d₁ and greater than d₂, a ratio value (1:N_{2,2}) corresponding to a distance range where the distance between the robot cleaner 100 and the liquid is less than d₂ and greater than d₃, ...., a ratio value (1:N_{2,n-1}) corresponding to a distance range between the robot cleaner 100 and the liquid where the distance between the robot cleaner 100 and the liquid is less than dₙ₋₁ and greater than dₙ. Here, N is a natural number greater than 1, and dₙ <dₙ₋₁ <...<d₂ <d₁. Also, N_{2,1} < N_{2,2} <...< N_{2,n-2} < N_{2,n-1}.

When the robot cleaner 100 is in the third area, the memory 132 may store a plurality of ratio values corresponding to a plurality of distance ranges. For example, the memory 132 may store a ratio value (1:N_{3,1}) corresponding to a distance range where the distance between the robot cleaner 100 and the liquid is less than d₁ and greater than d₂, a ratio value (1:N₃,₂) corresponding to a distance range where the distance between the robot cleaner 100 and the liquid is less than d₂ and greater than d₃, ...., a ratio value (1:N₃,ₙ₋₁) corresponding to a distance range between the robot cleaner 100 and the liquid where the distance between the robot cleaner 100 and the liquid is less than dₙ₋₁ and greater than dₙ. Here, N is a natural number greater than 1, and dₙ <dₙ₋₁ <...<d₂ <d₁. Also, N_{3,1} < N_{3,2} <...< N_{3,n-2} < N_{3,n-1}.

The processor 133 may identify a distance range to which the distance between the robot cleaner 100 and the liquid belongs among a plurality of distance ranges, and identify a ratio value corresponding to the identified distance range as a ratio between the number of times the robot cleaner 100 performs the operation of obtaining depth information and the number of times the robot cleaner 100 performs the operation of detecting liquid.

For example, when liquid is detected in front of the robot cleaner 100 and the robot cleaner 100 moves forward, the distance between the robot cleaner 100 and the liquid may become increasingly closer. In this case, the processor 133 may adjust the ratio such that as the robot cleaner 100 is close to the liquid, the robot cleaner 100 performs the operation of detecting liquid more frequently.

When it is identified that the robot cleaner 100 is close to the liquid, the robot cleaner 100 may avoid the liquid. For example, when it is identified that the robot cleaner 100 is close to the liquid, the robot cleaner 100 may change the traveling direction so that the robot cleaner 100 moves in the opposite direction along a path that is a certain distance away from the path the robot cleaner 100 has traveled. As the robot cleaner 100 moves in the opposite direction from the direction in which the liquid was detected, the distance between the robot cleaner 100 and the liquid may gradually increase. In this case, the processor 133 may adjust the ratio such that the robot cleaner 100 performs the operation of detecting liquid less frequently as the robot cleaner 100 moves further away from the liquid.

Subsequently, the robot cleaner 100 may again change the traveling direction to move in the direction in which the liquid is detected along a path that is a certain distance away from the path traveled by the robot cleaner 100. When the robot cleaner 100 moves in the direction in which the liquid is detected, the distance between the robot cleaner 100 and the liquid may become increasingly closer. In this case, the processor 133 may adjust the ratio such that as the robot cleaner 100 gets close to the liquid, the robot cleaner 100 performs the operation of detecting liquid more frequently.

As such, the robot cleaner 100 may perform the operation of detecting liquid during a cleaning operation while repeating the zigzag pattern of traveling, and once liquid is detected, may adjust the ratio at which the operation of detecting liquid is performed based on the distance between the robot cleaner 100 and the liquid.

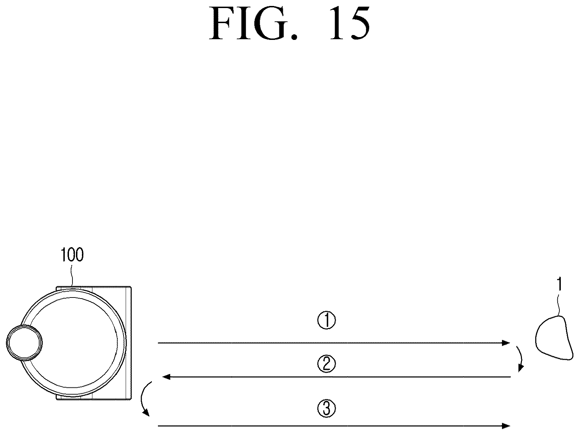

For example, referring to FIG. 15, the robot cleaner 100 may perform a cleaning operation by traveling in a zigzag pattern while it located in the first area. In this case, the robot cleaner 100 may perform a depth detecting operation and a liquid detecting operation based on a ratio of 1:N₁ corresponding to the first area.

The robot cleaner 100 may detect the liquid 1. In this case, when the robot cleaner 100 moves in the direction in which the liquid 1 is located ((1), (3) in FIG. 15), the robot cleaner 100 may gradually adjust the ratio between the number of times performing the operation of obtaining depth information and the number of times detecting liquid based on the distance between the robot cleaner 100 and the liquid 1, such as 1:N_{1,1}, 1:N_{1,2},...,1:N_{1,n-2}, 1:N_{1,n-1}. When the robot cleaner 100 moves in the opposite direction of the liquid 1 ((2) in FIG. 15), the robot cleaner 100 may gradually adjust the ratio between the number of times performing the operation of obtaining depth information and the number of times performing the operation of detecting liquid based on the distance between the robot cleaner 100 and the liquid 1, such as 1:N_{1,n-1}, 1:N_{1,n-2},...,1:N_{1,2}, 1:N_{1,1}.

In this case, N_{1,1} <N_{1,2} <...<N_{1,n-2} <N_{1,n-1}. In an embodiment, as the robot cleaner 100 gets closer to the liquid, the robot cleaner 100 may perform the operation of detecting liquid more frequently, thereby detecting the liquid effectively.

As mentioned above, the IR receiver 112 may include one or more IR cameras. For example, the IR receiver 112 may include a left IR camera and a right IR camera. The left IR camera is a camera disposed in a left area of the front of the body of the robot cleaner 100. The right IR camera is a camera disposed in a right area of the front of the body of the robot cleaner 100.

When performing the operation of detecting liquid, the processor 133 may perform photographing using only one IR camera of the two IR cameras. For example, the processor 133 may perform photographing using the left IR camera of the two IR cameras or the right IR camera of the two IR cameras.

In an embodiment, when performing the operation of detecting liquid, the processor 133 may alternately use the two IR cameras to perform photographing. In this case, the processor 133 may perform photographing using one IR camera per period. For example, the processor 133 may perform photographing using the left IR camera during one period and the right IR camera during the next period. Additionally, the processor 133 may perform photographing by using the two IR cameras alternately for the entire period.

In an embodiment, when liquid is detected while the processor 133 is performing the operation of detecting liquid, the processor 133 may perform photographing using the IR camera corresponding to the direction in which the liquid is detected among the two IR cameras.

For example, when liquid is detected on the front right side of the robot cleaner 100, the processor 133 may perform photographing using the right IR camera. In this case, the processor 133 may perform photographing using the right IR camera until the robot cleaner 100 is close to the liquid. Subsequently, when the robot cleaner 100 moves to avoid the liquid, or moves in the opposite direction of the liquid, the processor 133 may use one of the two IR cameras, or alternate between the two IR cameras, in the same manner as before using the right IR camera.

In an embodiment, when liquid is detected on the front left side of the robot cleaner 100, the processor 133 may perform photographing using the left IR camera. In this case, the processor 133 may perform photographing using the left IR camera until the robot cleaner 100 is close to the liquid. Subsequently, when the robot cleaner 100 moves to avoid the liquid, or moves in the opposite direction of the liquid, the processor 133 may use one of the two IR cameras, or alternate between the two IR cameras, in the same manner as before using the left IR camera.

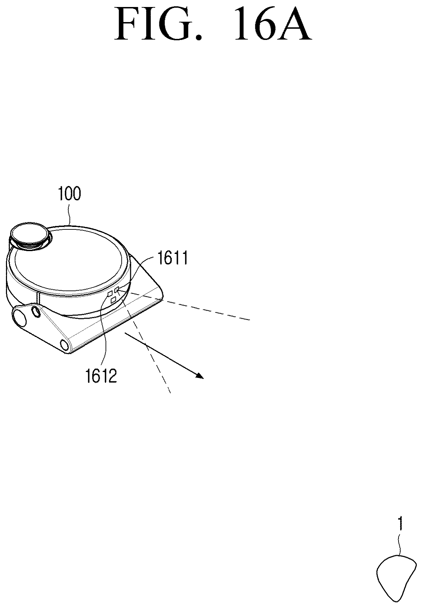

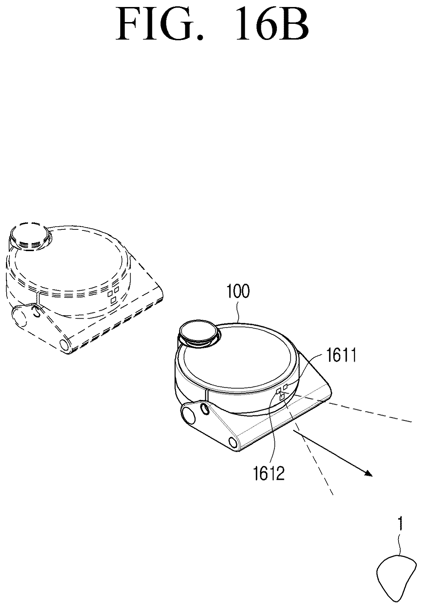

For example, referring to FIG. 16A, when performing the operation of detecting the liquid 1, the robot cleaner 100 may perform photographing using a left IR camera 1611 among two IR cameras 1611, 1612. In this case, as shown in FIG. 16B, the robot cleaner 100 may detect the liquid 1 on the front right side of the robot cleaner 100. In this case, when the robot cleaner 100 performs the operation of detecting liquid, the robot cleaner 100 may perform photographing using the right IR camera 1612 among the two IR cameras 1611, 1612.

In an embodiment, the robot cleaner 100 may perform the operation of detecting liquid using an IR camera corresponding to the direction in which the liquid is detected. Accordingly, the liquid on the floor may be effectively detected.

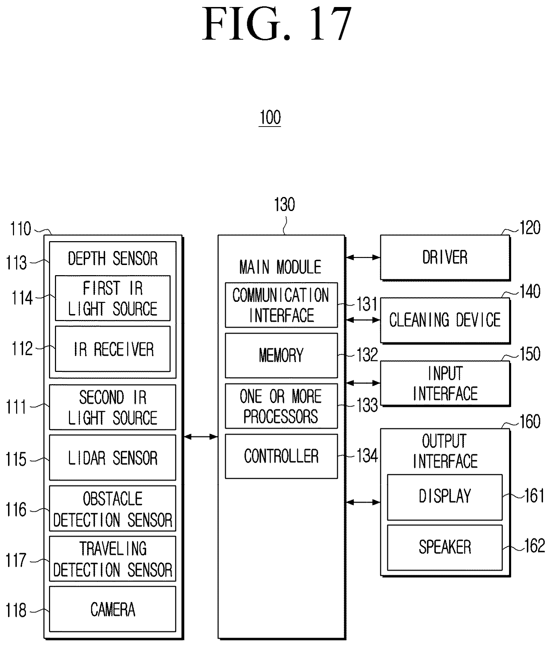

FIG. 17 is a block diagram of a configuration of a robot cleaner according to an embodiment.

Referring to FIG. 17, the robot cleaner 100 may include the sensor 110, the driver 120, the main module 130, a cleaning device 140, an input interface 150, and an output interface 160. The configuration of the robot cleaner 100 illustrated in FIG. 17 is only one embodiment, and new configurations may be added, or some configurations may be omitted, depending on the embodiment. The detailed description of the configurations illustrated in FIG. 17, which overlap with the configurations in FIG. 2, will be omitted.

The sensor 110 may detect a structure or an object in a space. The information obtained from the sensor 110 may be used to generate a map of the space. In an embodiment, the sensor 110 may detect liquid on the floor.

The sensor 110 may include a depth sensor 113 and a second IR light source 111.

Further, the sensor 110 may include at least one of a light detection and ranging (LiDAR) sensor 115, an obstacle detection sensor 116, a travel detection sensor 117, or a camera 118.

The LiDAR sensor 115 may output a laser in a 360-degree direction, and when a laser reflected from an object is received, may analyze the time difference for the laser to reflect back from the object and the signal strength of the received laser to obtain geometry information about the space. The geometry information may include the location, distance, direction, etc. of the object. The LiDAR sensor 115 may provide the obtained geometry information to the processor 133.

The obstacle detection sensor 116 may detect objects around the robot cleaner 100. For example, the obstacle detection sensor 116 may include at least one of an ultrasonic sensor, an IR sensor, a radio frequency (RF) sensor, a geomagnetic sensor, or a position sensitive device (PSD) sensor. The obstacle detection sensor 116 may detect objects that are in front of, behind, to the sides of, or in the traveling path of the robot cleaner 100. The obstacle detection sensor 116 may provide information about the detected objects to the processor 133.

The travel detection sensor 117 may detect the travel of the robot cleaner 100. For example, the travel detection sensor 117 may include at least one of a gyro sensor, a wheel encoder, or an acceleration sensor. The gyro sensor may detect the rotation direction and the rotation angle of the robot cleaner 100. The wheel encoder may detect the number of rotations of the wheels of the robot cleaner 100. The acceleration sensor may detect a change in the speed of the robot cleaner 100. The travel detection sensor 117 may provide the detected travel information to the processor 133.

The camera 118 may photograph the surroundings of the robot cleaner 100 to generate an image. For example, the camera 118 may include an RGB camera.

The cleaning device 140 may include a device for cleaning a floor. For example, the cleaning device 140 may include a cleaning module for sweeping dirt and suctioning dirt on the floor. In an embodiment, the cleaning device 140 may include a mopping module for performing mop cleaning. The suctioned foreign substances may be contained in a dust bin provided in the robot cleaner 100. The processor 133 may control the cleaning device 140 to suction foreign substances on the floor and perform mop cleaning while the robot cleaner 100 is stationary or while the robot cleaner 100 is moving. Accordingly, the robot cleaner 100 may clean the space.

The input interface 150 includes circuitry. The input interface 150 may receive a user input and transmit the user input to the processor 133. For example, the input interface 150 may receive various user inputs for setting or selecting various functions supported by the robot cleaner 100.

The input interface 150 may include various types of input devices.

According to an embodiment, the input interface 150 may include a physical button. The physical button may include a function key or a dial button. The physical button may also be implemented as one or more keys.

According to an embodiment, the input interface 150 may receive a user input using a touch method. For example, the input interface 150 may be implemented as a touch screen capable of performing the functions of a display 161.

According to an embodiment, the input interface 150 may receive a voice signal using a microphone. The processor 133 may perform a function corresponding to the voice signal. For example, the processor 133 may convert the voice signal to text data, obtain control instruction data corresponding to the voice signal based on the text data, and perform a function corresponding to the control instruction data.

The output interface 160 may include the display 161 and a speaker 162.

The display 161 may display various screens. The processor 133 may display various notifications, messages, information, etc. related to the operation of the robot cleaner 100 on the display 161.

The display 161 may be implemented as a display that includes a self-luminous element, or a display that includes a non-luminous element and a backlight. For example, the display 161 may be implemented as various types of displays, such as a liquid crystal display (LCD), organic light emitting diodes (OLED) display, light emitting diodes (LED) display, micro LED display, mini LED display, quantum dot light-emitting diodes (QLED), and the like.

The speaker 162 may output audio signals. The processor 133 may output warning sounds, notification messages, response messages corresponding to user inputs, and the like related to the operation of the robot cleaner 100 through the speaker 162.

The processor 133 may generate a map of the space using information obtained via the sensor 110. The map may be generated during an initial exploration process of the space. For example, the processor 133 may explore the space using the LiDAR sensor 115 to obtain terrain information about the space, and may use the terrain information to generate a map of the space.

The map may include a grid map. The grid map is a map that divides the space into cells of a certain size. For example, the grid map may be a map that divides the space into a plurality of cells having a preset size, with each cell indicating the presence or absence of an object. The plurality of cells may be divided into cells in which an object is not present (e.g., cells in which the robot cleaner 100 can travel) (free space) and cells in which an object is present (occupied space). Lines connecting cells occupied by objects may represent boundaries of the space (e.g., objects, etc.).

The processor 133 may use simultaneous localization and mapping (SLAM) to identify the location of the robot cleaner 100 on the map. For example, the processor 133 may use the LiDAR sensor 115 to obtain terrain information of the space, compare the obtained terrain information with prestored terrain information or compare the obtained terrain information with each other to identify the location of the robot cleaner 100 on the map. However, the disclosure is not limited thereto, and the processor 133 may identify the location of the robot cleaner 100 on the map via SLAM using the camera 118.

The processor 133 may use the information obtained through the sensor 110 to control the travel of the robot cleaner 100.

For example, the processor 133 may control the driver 120 to cause the robot cleaner 100 to travel through a space using a map stored in the memory 132. Further, the processor 133 may obtain information using the sensor 110 while the robot cleaner 100 is traveling through the space, and may use the obtained information to detect an object around the robot cleaner 100. When an object is detected, the processor 133 may control the driver 120 to cause the robot cleaner 100 to travel by avoiding the object.

In an embodiment, the processor 133 may use the information obtained through the sensor to identify traveling information, such as the speed at which the robot cleaner 100 is traveling, the distance traveled by the robot cleaner 100, and the like, and update the location of the robot cleaner 100 on the map based on the traveling information.

Further, when liquid is detected on the floor, the processor 133 may control the robot cleaner 100 to move around the liquid, or to move after cleaning the liquid. In this case, if the robot cleaner 100 is cleaning the liquid, the processor 133 may control the driver 120 to clean the liquid using a mop or the like of the cleaning device 140, and cause the robot cleaner 100 to travel past the area from which the liquid was removed.

In an embodiment, the processor 133 may identify the type of liquid using the image obtained through the camera 118.

The type of liquid may be determined based on the color of the liquid. For example, the processor 133 may identify that the liquid is water if the color of the liquid is the same as the color of the floor around the liquid. In an embodiment, the processor 133 may determine that the liquid is not water if the color of the liquid is different from the color of the floor around the liquid. In this case, the same color may include that the difference in RGB values is within a preset value, and the different color may include that the difference in RGB values exceeds a preset value.

For example, the processor 133 may match an IR image obtained through the IR receiver 112 with an image obtained through the camera 118.

According to an embodiment, the processor 133 may identify a floor in an IR image obtained through the IR receiver 112, and may identify a floor in an image obtained through the camera 118. Subsequently, the processor 133 may match the IR image obtained through the IR receiver 112 and the image obtained through the camera 118 such that the floors are matched to each other based on the locations of the identified floors.

The processor 133 may identify, in the image, an area of the same location as the area where the identified liquid is present in the IR image based on the IR image and the image matched to each other, and identify that the liquid is in the identified area in the image. In an embodiment, the processor 133 may identify whether the liquid is water by comparing the color of the area where the liquid is present with the color of the surrounding area based on the RGB values of the area where the liquid is present and the surrounding area in the image.

According to an embodiment, the processor 133 may identify the type of liquid by inputting the image obtained via the camera 118 to an artificial intelligence model.

The memory 132 may store an artificial intelligence model. The artificial intelligence model may include a neural network model trained to predict the type of liquid in the image. The artificial intelligence model may include a neural network model consisting of model parameters that are trained by applying images as input data and the type of liquid included in the images as output answer values. The processor 133 may input the images to the artificial intelligence model to obtain information about the type of liquid included in the images from the artificial intelligence model, and identify whether the liquid is water based on the information about the type of liquid.

Based on the type of liquid, the processor 133 may identify whether the robot cleaner 100 should perform a cleaning run or an avoidance run for the liquid.

For example, when the type of mop is a panning type and the liquid is water, the processor 133 may identify that the robot cleaner 100 performs a cleaning run for the liquid, and when the type of mop is a panning type and the liquid is not water, the processor 133 may identify that the robot cleaner 100 performs an avoidance run for the liquid.

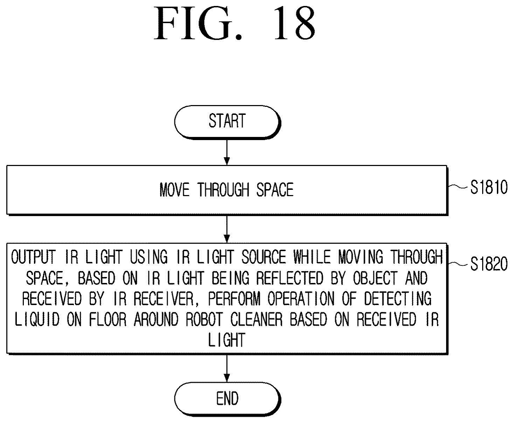

FIG. 18 is a flowchart of a liquid detecting method of a robot cleaner according to an embodiment.

In operation S1810, the robot cleaner may move through a space.

In operation S1820, the robot cleaner may output IR light using an IR light source while moving through the space, and when the IR light is reflected by an object and received by an IR receiver, the robot cleaner may perform the operation of detect liquid on the floor around the robot cleaner based on the received IR light. In this case, the robot cleaner may perform the operation of detecting liquid in the first mode, and when liquid is detected, change the mode of the robot cleaner to the second mode, and perform the operation of detecting liquid in the second mode.

Here, the first mode may be a mode in which the operation of detecting liquid is performed based on a certain period, and the second mode may be a mode in which the period of the operation of detecting liquid is changed depending on the distance between the robot cleaner and the liquid.

In operation S1820, the robot cleaner may output IR light to the front of the robot cleaner using an IR light source, photograph the front of the robot cleaner using an IR receiver to obtain an IR image using the received IR light, and identify whether there is liquid on the floor in front of the robot cleaner based on the IR image.

In operation S1820, when the mode of the robot cleaner is changed to the second mode, the robot cleaner may identify the distance between the robot cleaner and the liquid based on the received IR light, identify a period of the operation of detecting liquid in the second mode based on the distance between the robot cleaner and the liquid, and perform the operation of detecting liquid based on the identified period. In this case, the period of the second mode may have a smaller value as the distance between the robot cleaner and the liquid gets closer.

In an embodiment, the period of performing the liquid detecting operation of the robot cleaner in the second mode may be shorter than the period of performing the liquid detecting operation of the robot cleaner in the first mode.

In operation S1820, when the robot cleaner performs a cleaning run for liquid, the robot cleaner may perform the cleaning of the liquid, and when the cleaning of the liquid is completed, may perform the operation of detecting liquid based on the currently set period in the second mode.

In operation S1820, when the robot cleaner has traveled a preset distance after completing cleaning of the liquid, the robot cleaner may change the mode of the robot cleaner to the first mode, and perform the operation of detecting liquid in the first mode.

In operation S1820, when the robot cleaner performs an avoidance run for liquid, the robot cleaner may maintain the currently set period in the second mode while the robot cleaner changes the traveling direction, and when the robot cleaner changes the traveling direction and moves in a direction away from the liquid, may change the mode of the robot cleaner to the first mode, and perform the operation of detecting liquid in the first mode.

In operation S1820, when the traveling direction of the robot cleaner that was moving in a direction away from the liquid is changed and the robot cleaner moves in a direction of the liquid, the robot cleaner may change the mode of the robot cleaner to the second mode based on the distance between the robot cleaner and the liquid, and perform the operation of detecting liquid in the second mode.

In operation S1820, the robot cleaner may identify the distance between the robot cleaner and the liquid while the robot cleaner is moving in the direction of the liquid along a path that is a certain distance away from the path that the robot cleaner moved in the direction away from the liquid, and when the identified distance is a preset distance, the robot cleaner may change the mode of the robot cleaner to the second mode.

In the disclosure, the neural network model refers to an artificial intelligence model including a neural network and can be trained by deep learning. The neural network may include, for example, at least one of Convolutional Neural Network (CNN), Recurrent Neural Network (RNN), Restricted Boltzmann Machine (RBM), Deep Belief Network (DBN), Bidirectional Recurrent Deep Neural Network (BRDNN), Generative Adversarial Networks (GAN), or Deep Q-Networks. However, the neural network model is not limited to the examples described above.

The above-described various embodiments may be implemented in a recording medium that can be read by a computer or a similar device using software, hardware, or a combination thereof. In some cases, embodiments described herein may be implemented by a processor itself. According to software implementation, embodiments such as procedures and functions described in this disclosure may be implemented as separate software codes. Each of the software codes may perform one or more functions and operations described in this disclosure.

Computer instructions for performing processing operations of the electronic apparatus according to the above-described various embodiments may be stored in a non-transitory computer-readable medium. When being executed by a processor of a specific device, the computer instructions stored in such a non-transitory computer-readable medium allows the specific device to perform processing operations in the robot cleaner 100 according to the above-described various embodiments.

The non-transitory computer-readable medium refers to a medium that stores data semi-permanently and can be read by a device, rather than a medium that stores data for a short period of time, such as registers, caches, memory, etc. Specific examples of the non-transitory computer-readable medium may include CD, DVD, hard disk, Blu-ray disk, USB, memory card, ROM, etc.

Although preferred embodiments of the disclosure have been shown and described above, the disclosure is not limited to the specific embodiments described above, and various modifications may be made by one of ordinary skill in the art without departing from the spirit of the disclosure of the claims, and such modifications are not to be understood in isolation from the technical ideas or prospect of the disclosure.

## Claims

1. A robot cleaner comprising:
an infrared ray (IR) light source;
an IR receiver;
a driver; and
one or more processors operatively connected to the IR light source, the IR receiver, and the driver, the one or more processors being configured to:
control the driver to move the robot cleaner through a space,
output IR light using the IR light source while the robot cleaner moves through the space, and
perform an operation of detecting liquid on a floor around the robot cleaner based on the IR light that is reflected by an object and received by the IR receiver,
wherein the one or more processors are further configured to:
perform the operation of detecting liquid in a first mode,
based on the liquid being detected, change a mode of the robot cleaner to a second mode, and
perform the operation of detecting liquid in the second mode,
wherein, in the first mode, the operation of detecting liquid is performed based on a specific period, and
wherein, in the second mode, a period of the operation of detecting liquid is changed based on a distance between the robot cleaner and the liquid.

2. The robot cleaner of claim 1, wherein the one or more processors are further configured to:
output the IR light to a front of the robot cleaner using the IR light source,
obtain an IR image using the received IR light by photographing a front of the robot cleaner using the IR receiver, and
identify whether there is liquid on the floor in front of the robot cleaner based on the IR image.

3. The robot cleaner of claim 2, wherein the one or more processors are further configured to:
based on the mode of the robot cleaner being changed to the second mode, identify a distance between the robot cleaner and the liquid based on the received IR light;
identify a period of the operation of detecting liquid in the second mode based on a distance between the robot cleaner and the liquid; and
perform the operation of detecting liquid based on the identified period, and
wherein the period of the second mode decreases as a distance between the robot cleaner and the liquid decreases.

4. The robot cleaner of claim 3, wherein a period during which the robot cleaner performs the operation of detecting liquid in the second mode is shorter than a period during which the robot cleaner performs the operation of detecting liquid in the first mode.

5. The robot cleaner of claim 3, wherein the one or more processors are further configured to:
based on the robot cleaner travelling to clean the liquid, clean the liquid, and
based on cleaning of the liquid being completed, perform the operation of detecting liquid based on a set period in the second mode.

6. The robot cleaner of claim 5, wherein the one or more processors are further configured to, based on the robot cleaner moving a preset distance after completing cleaning of the liquid, change the mode of the robot cleaner to the first mode, and perform the operation of detecting liquid in the first mode.

7. The robot cleaner of claim 3, wherein the one or more processors are further configured to:
based on the robot cleaner travelling to avoid the liquid, maintain the set period in the second mode while the robot cleaner changes a travelling direction; and
based on the robot cleaner changing a travelling direction and moving in a direction away from the liquid, change the mode of the robot cleaner to the first mode, and perform the operation of detecting liquid in the first mode.

8. The robot cleaner of claim 7, wherein the one or more processors are further configured to, based on the travelling direction of the robot cleaner that was moving in a direction away from the liquid being changed and the robot cleaner moving in a direction of the liquid, change the mode of the robot cleaner to the second mode based on a distance between the robot cleaner and the liquid, and perform the operation of detecting liquid in the second mode.

9. The robot cleaner of claim 8, wherein the one or more processors are further configured to:
identify a distance between the robot cleaner and the liquid when the robot cleaner moves in the direction of the liquid along a path that is a distance away from a path that travels in the direction away from the liquid; and
based on the identified distance being a preset distance, change the mode of the robot cleaner to the second mode.

10. A method of detecting liquid performed by a robot cleaner, the method comprising:
moving the robot cleaner through a space;
outputting infrared ray (IR) light using an IR light source while the robot cleaner moves through the space; and
performing an operation of detecting liquid on a floor around the robot cleaner based on the IR light that is reflected by an object and received by an IR receiver,
wherein the performing the operation of detecting liquid comprises:
performing the operation of detecting liquid in a first mode, based on the liquid being detected,
changing a mode of the robot cleaner to a second mode, and
performing the operation of detecting liquid in the second mode,
wherein, in the first mode, the operation of detecting liquid is performed based on a specific period, and
wherein, in the second mode, a period of the operation of detecting liquid is changed based on a distance between the robot cleaner and the liquid.

11. The method of claim 10, wherein the performing the operation of detecting liquid further comprises:
outputting the IR light to a front of the robot cleaner using the IR light source,
obtaining an IR image using the received IR light by photographing a front of the robot cleaner using the IR receiver; and
identifying whether there is liquid on the floor in front of the robot cleaner based on the IR image.

12. The method of claim 11, wherein the performing the operation of detecting liquid further comprises:
based on the mode of the robot cleaner being changed to the second mode, identifying a distance between the robot cleaner and the liquid based on the received IR light;
identifying a period of the operation of detecting liquid in the second mode based on a distance between the robot cleaner and the liquid; and
performing the operation of detecting liquid based on the identified period, and
wherein the period of the second mode decreases as a distance between the robot cleaner and the liquid decreases.

13. The method of claim 12, wherein a period during which the robot cleaner performs the operation of detecting liquid in the second mode is shorter than a period during which the robot cleaner performs the operation of detecting liquid in the first mode.

14. The method of claim 12, wherein the performing the operation of detecting liquid further comprises, based on the robot cleaner travelling to clean the liquid, causing the robot cleaner to clean the liquid, and based on cleaning of the liquid being completed, performing the operation of detecting liquid based on a set period in the second mode.

15. The method of claim 14, wherein the performing the operation of detecting liquid further comprises, based on the robot cleaner moving a preset distance after completing cleaning of the liquid, changing the mode of the robot cleaner to the first mode, and performing the operation of detecting liquid in the first mode.
